Europäisches Patentamt

(19) **European Patent Office**

**Office européen des brevets**

(11) Numéro de publication: **0 006 436**
**B1**

(12) **FASCICULE DE BREVET EUROPEEN**

(45) Date de publication du fascicule du brevet: **20.01.82**

(51) Int. Cl.³: **G 06 F 3/04, H 04 L 11/00**

(21) Numéro de dépôt: **79101432.7**

(22) Date de dépôt: **10.05.79**

(54) **Contrôleur d'entrée/sortie des données dans un système de traitement de données.**

(30) Priorité: **26.06.78 US 919107**

(43) Date de publication de la demande:
**09.01.80 Bulletin 80/1**

(45) Mention de la délivrance du brevet:
**20.01.82 Bulletin 82/3**

(84) Etats contractants désignés:
**BE CH DE FR GB NL SE**

(56) Documents cités:
**US - A - 3 673 576**
**US - A - 4 025 906**
**US - A - 4 093 981**

**IBM TECHNICAL DISCLOSURE BULLETIN**
**vol. 21, n° 7, décembre 1978**
**New York (US)**
**NAGEL et al.: "Programmable Communications**
**Subsystem Having Controller Incorporating**
**Microprocessor", pages 2633—2645**

(73) Titulaire: **International Business Machines**
**Corporation**
**Armonk, N.Y. 10504 (US)**

(72) Inventeur: **Brown, Lewis Wright**
**350 SW 13 St.**
**Boca Raton Florida 33432 (US)**
Inventeur: **Chisholm, Douglas Roderick**
**1531 Ilene Court**
**Delray Beach Florida 33444 (US)**
Inventeur: **Dixon, Jerry Duane**
**801 Enfield St.**
**Boca Raton Florida 33431 (US)**

(74) Mandataire: **Bonneau, Gérard**
**COMPAGNIE IBM FRANCE Département de**
**Propriété Industrielle**
**F-06610 La Gaude (FR)**

Courier Press, Leamington Spa, England.

Contrôleur d'entrée/sortie des données dans un système de traitement des données

Domaine Technique

La présente invention concerne un contrôleur d'entrée/sortie pour transférer des données entre un processeur principal et une ou plusieurs unités d'entrée/sortie (I/O) dans un système de traitement de données numériques.

Etat de la technique antérieure

Jusqu'ici, des micro-processeurs ont été employés en tant que contrôleurs d'entrée/sortie pour transférer des données entre des processeurs principaux et des unités d'entrée/sortie. Dans ces conditions, les données sont transférées du processeur principal au microprocesseur et, ensuite, du microprocesseur à l'unité d'entrée/sortie pour une opération "d'écriture" d'unité d'entrée/sortie et, inversement, de l'unité d'entrée/sortie au microprocesseur et ensuite du microprocesseur au processeur principal pour une opération de "lecture" d'unité d'entrée/sortie. Le transfert de ces données demande du temps en ce sens que de nombreuses instructions doivent être exécutées au sein du microprocesseur pour chaque multiplet ou mot de données transféré. Un tel système est par exemple décrit dans l'article de E. Hörbst "Mikroprozessoren und Mikrocomputer" paru dans "Applied Computer Science" de 1977, pages 115 à 128.

De même il est connu d'utiliser des systèmes dans lesquels le transfert des données, une fois initialisé, entre le processeur principal et une unité d'entrée/sortie peut se faire par accès direct à la mémoire (DMA). Un tel système est décrit dans le brevet US—A 4 093 981.

Un autre système, décrit dans le brevet US—A 3 673 576, comporte une liaison de transfert directe des données entre le processeur et un dispositif périphérique connecté par l'intermédiaire d'une unité de commande. Dans ce système, une fois que le transfert est initialisé, l'unité de commande est disponible pour effectuer d'autres opérations d'entrée/sortie telles que des commandes d'interruption du processeur dues à d'autres unités d'entrée/sortie que celle qui est impliquée dans le transfert direct des données.

Dans le type de système tel que décrit dans le brevet ci-dessus, les données transitent par l'intermédiaire de registres. Généralement, les données en provenance d'un dispositif périphérique sont emmagasinées dans un premier registre à l'interface entre le contrôleur d'entrée/sortie et les dispositifs périphériques, puis sont transmises dans un second registre à l'interface entre le processeur et le contrôleur d'entrée/sortie avant d'être transférées dans la mémoire du processeur. Chaque fois que des données sont prêtes à être transférées vers le processeur le contrôleur transmet une demande de service au processeur et le transfert a lieu lorsque ce dernier renvoie un signal d'autorisation vers le contrôleur d'entrée/sortie.

Exposé de l'invention

Les systèmes de traitement de données utilisant un contrôleur d'entrée/sortie, tels que décrits ci-dessus, présentent tous l'inconvénient de nécessiter une perte de temps due soit à l'exécution de nombreuses instructions lorsque les données transitent par l'intermédiaire d'un microprocesseur, soit à l'échange de signaux avec le processeur principal lorsqu'il existe une voie de transfert direct des données entre ledit processeur et les unités d'entrée/sortie.

C'est pourquoi l'objet de la présente invention est un contrôleur d'entrée/sortie de données comportant un nouveau mécanisme de transfert à vitesse élevée, automatique, perfectionné, au moyen duquel, en mode automatique, les données peuvent être transférées directement du processeur principal à une unité d'entrée/sortie, et vice-versa, sans avoir à passer par le microprocesseur et sans nécessiter aucune intervention de la part du microprocesseur en l'absence d'erreurs ou d'incidents, et dans lequel un mécanisme d'anticipation permet à la séquence d'échange de signaux de demande de service avec le processeur d'avoir lieu avant même que les données soient transférées dans le registre d'interface avec le processeur, donc de chevaucher la séquence consacrée au transfert des données.

Selon l'invention un contrôleur d'entrée/sortie pour transférer des données entre un processeur principal et des unités d'entrée/sortie comprend: une première unité de données pour envoyer des données au processeur principal et pour recevoir des données en provenance de ce processeur, une seconde unité de données pour envoyer des données à une unité d'entrée/sortie et pour recevoir des données en provenance de cette unité, un bus de transfert de données à vitesse élevée fournissant une connexion de transfert de données directe entre la première et la seconde unité de données, un circuit de commande couplé aux première et seconde unités de données pour commander automatiquement le transfert de données du processeur principal à l'unité d'entrée/sortie au moyen de la première unité de données, du bus de transfert de données à vitesse élevée et de la seconde unité de données lorsque le système fonctionne en mode de sortie automatique, et le transfert de données de l'unité d'entrée/sortie au processeur principal au moyen de la seconde unité de données, du bus de transfert de données à vitesse élevée et de la première unité de données lorsque le système est en mode d'entrée automatique; une premier circuit d'interface pour envoyer des signaux de commande d'interface au processeur principal et pour recevoir des signaux de commande d'interface en provenance de ce processeur, un second circuit d'interface pour envoyer des signaux de commande d'interface à l'unité d'entrée/sortie et pour recevoir des signaux de commande d'interface en provenance de cette unité; une unité de commande telle qu'un microprocesseur, couplée aux première et seconde unités de données, aux premier et second circuits d'interface et au circuit de commande automatique pour superviser la synchronisation des opérations dans le contrôleur, pour échanger des informations de commande/état avec le processeur principal et avec l'unité d'entrée/sortie et pour fournir une initialisation du circuit de commande avant le commencement des opérations de transfert automatique.

Le contrôleur d'entrée/sortie de la présente invention est caractérisé par un mécanisme d'anticipation fournissant un signal de demande de service par vols de cycles au processeur principal en réponse au circuit de commande de transfert automatique et indiquant que des données à destination du processeur se trouvent dans la seconde unité de données de sorte que la demande de service est transmise avant que les données soient transférées dans la première unité de données par le bus de transfert de données à vitesse élevée.

Le contrôleur d'entrée/sortie de la présente invention permet au processeur principal de communiquer avec plusieurs unités d'entrée/sortie de façon plus rapide et plus efficace. Plus particulièrement, dans le mode de réalisation décrit ici, le contrôleur comprend également des circuits pour permettre la prise en charge d'une commande d'entrée/sortie provenant du processeur principal pour une première unité d'entrée/sortie alors que des transferts de données à vitesse élevée en mode par vol de cycle ont lieu avec une deuxième unité d'entrée/sortie et alors que le microprocesseur amorce une séquence d'interruption sur le processeur principal pour une troisième unité d'entrée/sortie.

Brève description des dessins

La figure 1 représente un bloc diagramme de fonctionnement général d'un système de traitement de données numériques dans lequel est incorporé un contrôleur d'entrée/sortie selon la présente invention.

La figure 2 formée des figures 2A et 2B représente un bloc diagramme de fonctionnement général montrant de façon plus détaillée le contrôleur d'entrée/sortie de la figure 1.

La figure 3 représente le format d'un bloc immédiat de commande de dispositif IDCB.

La figure 4 représente la structure d'un bloc de commande de dispositif DCB.

La figure 5 représente le format du mot d'interruption.

La figure 6 représente schématiquement les circuits de commande de vol de cycle de la figure 2.

La figure 7 est un diagramme des temps utilisé pour expliquer le fonctionnement des commandes de vol de cycle de la figure 6.

La figure 8 représente de façon plus détaillée la nature du bus d'indication de dispositif de la figure 2.

La figure 9 représente de façon détaillée les circuits de commande d'interface de dispositif de la figure 2.

La figure 10 représente en détail les circuits de commande de transfert direct de la figure 2, et

La figure 11 est une diagramme des temps utilisé pour expliquer certaines possibilités de traitement simultané de contrôleur de la figure 2.

Mode de réalisation de l'invention

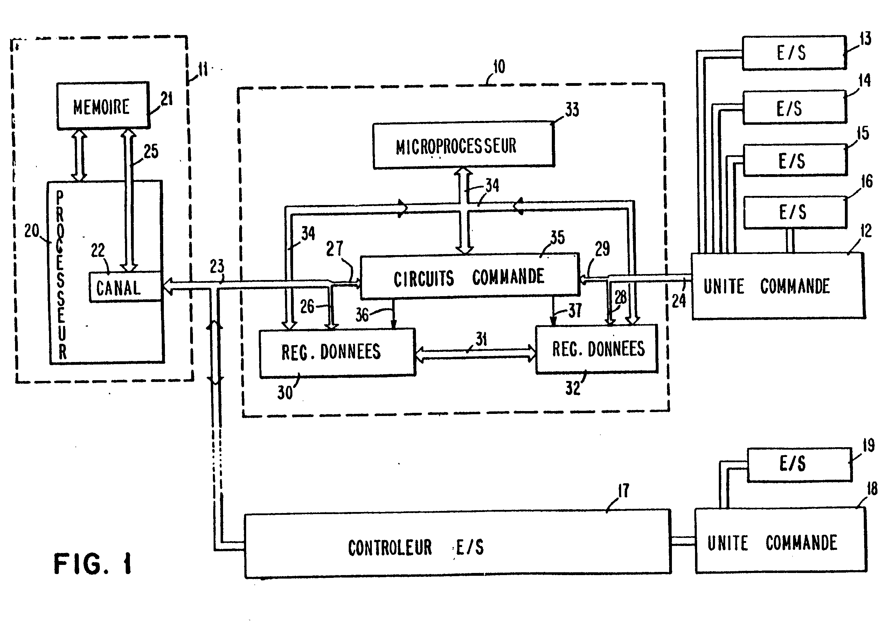

La figure 1 représente un système de traitement de données numériques qui comprend un contrôleur d'entrée/sortie (I/O) 10 construit conformément aux principes de la présente invention.

Le contrôleur d'entrée/sortie 10 commande le transfert de données et d'autres informations entre un processeur principal 11 et une unité de commande de dispositif 12 auxquels sont connectés plusieurs dispositifs d'entrée/sortie 13, 14, 15, 16. Le système global peut également comprendre d'autres contrôleurs d'entrée/sortie, par exemple, le contrôleur d'entrée/sortie 17. A la sortie du contrôleur 17 est connectée une unité de commande de dispositif 18 à laquelle est couplé un dispositif d'entrée/sortie 19. Le contrôleur 17 peut être du même type que le contrôleur d'entrée/sortie 10 ou il peut être de construction entièrement différente.

Le processeur principal 11 comprend une unité de traitement ou processeur 20 et une mémoire principale 21. Un sous-système de canal d'entrée/sortie 22 pour communiquer avec les divers contrôleurs d'entrée/sortie par le bus d'interface de canal 23, est incorporé dans le processeur 20. Le contrôleur d'entrée/sortie 10 communique à son tour avec l'unité de commande de dispositif 12 au moyen d'un bus d'interface de dispositif 24. Comme l'indique le bus d'emmagasinage par vol de cycle 25, les données et toutes autres informations peuvent passer de la mémoire principale 21 au sous-système de canal 22 ou vice-versa sans interrompre un programme d'utilisation alors exécuté par le processeur principal 11. Ce mode d'opération est connu sous le terme de "vol de cycle".

A titre d'exemple, on suppose que le processeur principal 11 est un mini-ordinateur du type IBM décrit dans la littérature suivante:

(1) Le manuel IBM intitulé "Series/1. Model 5, 4955 Processor Description", Numéro d'ordre IBM GA34—0021 (première édition de novembre 1976);

(2) Le manuel IBM intitulé "IBM Series/1 4955 Processor Theory", Numéro d'ordre IBM SY34—0041 (première édition de janvier 1977);

(3) Le brevet US—A No. 4 038 642.

Il est à noter que le brevet des E.U.A. mentionné ci-dessus décrit, entre autres, un contrôleur d'entrée/sortie qui peut être considéré comme étant le prédécesseur du contrôleur d'entrée/sortie 10 de la présente invention illustré sur la figure 1. La description de ce contrôleur de l'art antérieur est donnée dans le brevet précité en référence aux figures 18 à 21 de ce brevet.

Comme on peut le voir dans le contrôleur d'entrée/sortie 10, le bus d'interface de canal 23 se subdivise en un bus de données de canal 26 et un bus de commande de canal 27. De façon semblable, le bus d'interface de dispositif 24 se subdivise en un bus de données de dispositif 28 et un bus de commande de dispositif 29. Pour des opérations automatiques de transfert par vol de cycle à vitesse élevée, le bus de données 26 et 28 sont interconnectés par un registre de données 30, un bus de données de dérivation 31 et un registre de données de dispositif 32. Chacun des bus 26, 28 et 31 est un bus bidirectionnel et des données peuvent être envoyées dans les deux sens sur chacun de ces bus. (Dans quelques réalisations, le bus de dérivation 31 peut comprendre deux bus unidirectionnels, un premier bus pour transférer les données dans un premier sens et un deuxième bus pour transférer les données dans l'autre sens, mais il est clair que ces deux bus équivalent à un seul bidirectionnel).

Pour des opérations de transfert de données par vol de cycle non automatiques, les données ou autres informations peuvent être transférées dans les deux sens entre le processeur principal 11 et un microprocesseur 33 placé dans le contrôleur 10, ce transfert se faisant au moyen du bus de données de canal 26, du registre de données 30 et d'un bus de données de microprocesseur (MP) 34. De façon semblable, les données ou toutes autres informations, peuvent être transférées dans les deux sens entre le microprocesseur 33 et l'unité de commande de dispositif 12 au moyen du bus de données de microprocesseur 34, du registre de données de dispositif 32 et du bus de données de dispositif 28.

Le bus de commande de canal 27, le bus de commande de dispositif 29 et le bus de données de microprocesseur 34 communiquent chacun avec les circuits de commande 35 placés dans le contrôleur 10. En réponse à une commande de transfert par vol de cycle en provenance du processeur principal 11, le microprocesseur 33 fonctionne pour fournir diverses valeurs et paramètres initiaux aux circuits de commande 35. Ensuite, les circuits de commande 35 sont capables de commander automatiquement les opérations de transfert de données sans autre intervention de la part du microprocesseur 33. En d'autres termes, dans le cas d'une opération par vol de cycle automatique, le microprocesseur 33 initialise les circuits de commande 35; après quoi, les circuits de commande 35 prennent la suite des opérations et exécutent les opérations véritables de transfert de données. Ces opérations comprennent l'application d'impulsions de chargement de registre, par les lignes 36 et 37, au registre de données de vol de cycle 30 et au registre de données de dispositif 32. Une impulsion de chargement sur la ligne 36 transfère les données provenant du registre de données de dispositif 32, par le bus de données de dérivation 31, sur le registre de données de vol de cycle 30, tandis qu'une impulsion de chargement sur la ligne 37 transfère les données dans le sens opposé. La commande automatique fournie par les circuits de commande 35 accomplit en outre les séquences de mise en communication appropriées sur le bus de commande de canal 27 pour transférer les données entre le processeur principal 11 et le registre de données de vol de cycle 30, et les séquences de mise en communication appropriées sur le bus de commande de dispositif 29 pour transférer les données entre l'unité de commande de dispositif 12 et le registre de données de dispositif 32.

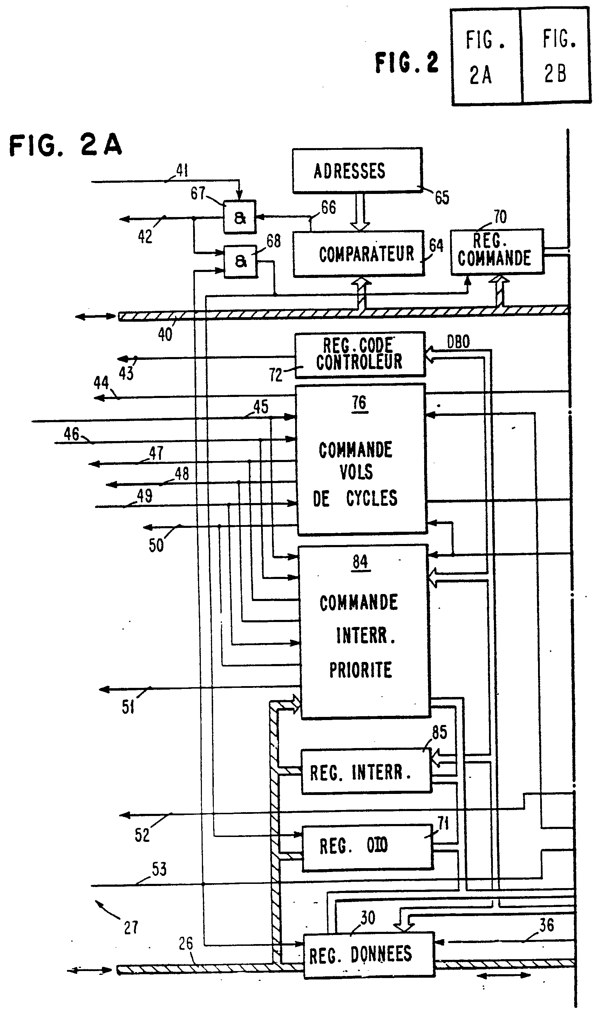

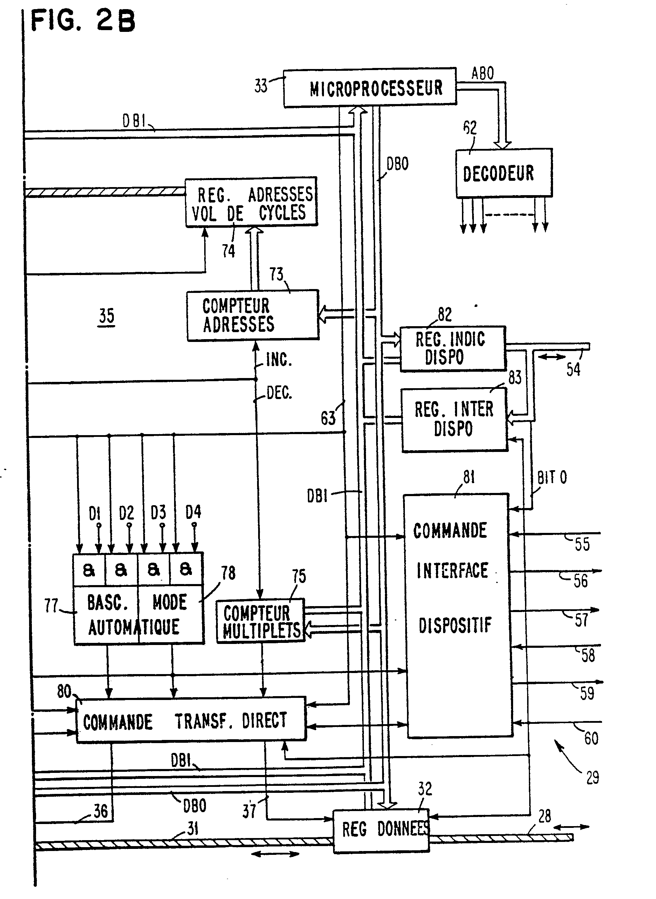

La figure 2 formée des figures 2A et 2B représente les principaux éléments et bus de circulation de données placés dans le contrôleur d'entrée/sortie 10 de la figure 1. Le terme "données" tel qu'il est utilisé dans la phrase précédente, est utilisé dans son sens le plus large et correspond à toutes sortes d'informations comprenant les adresses, les mots d'état, les codes de condition, et autres. Comme cela est indiqué sur le côté gauche de la figure 2, le bus de commande de canal 27 comprend un bus 40 d'adresses à 16 bits et divers autres bus et lignes de signalisation 41—53. Ces bus et lignes 40—53 et leurs fonctions sont décrits de façon détaillée dans le brevet US—A No. 4 038 642 mentionné ci-dessus et ces descriptions ne vont pas être répétées en détail ici. Comme l'indique le côté droit de la figure 2, le bus de commande de dispositif 29 comprend un bus 54 d'indicateur de dispositif à 8 bits, ainsi que diverses lignes de signalisation 55—60.

Dans le mode de réalisation décrit ici, un "multiplet" comprend huit bits et un "mot" comprend deux multiplets (seize bits).

Le microprocesseur 33 est supposé comprendre une unité d'emmagasinage à accès sélectif ayant une capacité d'emmagasinage de 4096 multiplets, voire davantage. Le bus 34 de données de microprocesseur comprend deux bus unidirectionnels distincts, à savoir, le bus d'entrée de données (DBI) pour amener les données et autres informations dans le microprocesseur 33 et un bus de sortie de données (DBO) pour extraire les données et autres informations emmagasinées dans le microprocesseur 33. Le microprocesseur 33 comprend également un bus de sortie d'adresses (ABO) pour envoyer des "adresses" externes à un décodeur ABO 62. Quelquefois, "l'adresse" sur le bus ABO va identifier dans le contrôleur un registre particulier qui doit envoyer des données ou recevoir des données en provenance du microprocesseur 33. D'autres fois, "l'adresse" sur le bus ABO va identifier des fonctions particulières à remplir par le contrôleur de la figure 2. Dans tous les cas, "l'adresse" sur le bus ABO est décodée par le décodeur 62 pour produire le signal, ou les signaux de commande particuliers nécessaires pour atteindre le but voulu. Quelques uns de ces signaux de commande sont utilisés pour charger les registres particuliers tandis que d'autres sont utilisés pour permettre différentes combinaisons des diverses portes de commande (non représentées) associées aux divers bus et lignes de circulation de données du contrôleur de la figure 2.

Pour plus de simplicité, la plupart des connexions des lignes de commande à partir du décodeur 62, ne sont pas représentées sur la figure 2. A titre d'exemple, chacun des bus DBI, DBO et ABO est supposé être un bus à huit bits. Le micro-processeur 33 a également une ligne de sortie de référence de commande 63 qui est utilisée pour fournir des signaux de référence aux divers éléments du contrôleur de la figure 2.

Comme il est d'usage dans les microprocesseurs, le microprocesseur 33 est une machine à programmes emmagasinés et cette machine emmagasine le programme approprié à utiliser avec le contrôleur de la figure 2. Ce programme comprend les diverses routines nécessaires pour accomplir les diverses fonctions et opérations qui doivent l'être dans le contrôleur de la figure 2. Quelques unes de ces routines vont être mentionnées dans la suite de la description.

On va maintenant décrire la procédure au moyen de laquelle le processeur principal 11 établit une connexion et procède à des communications avec le contrôleur d'entrée/sortie 10. De façon générale, le processeur principal 11 indique au contrôleur d'entrée/sortie 10 ce qu'il faut faire en envoyant des commandes d'entrée sortie au contrôleur 10. Pour le cas considéré il y a deux catégories fondamentales de commandes d'entrée/sortie. Une première catégorie est connue en tant que commande directe par programme (DPC). Chacune de ces commandes est capable de transférer un mot (deux multiplets) de données du processeur principal 11 au contrôleur d'entrée/sortie 10 et vice-versa. En d'autres termes, une nouvelle commande est envoyée pour chaque mot qui est transféré. Etant donné que chaque commande est envoyée à la suite d'une instruction distincte du programme du processeur principal, chaque transfert de mot se fait sous la commande directe du programme du processeur principal.

L'autre catégorie de commande d'entrée/sortie fournie par le processeur principal 11 va être appelée ici commandes par vol de cycle. Chaque commande de transfert de données par vol de cycle est capable de provoquer le transfert d'un nombre de mots de données relativement grand, chaque transfert de mot étant fait dans un mode de vol de cycle de sorte que le programme du processeur principal ne soit pas interrompu. En d'autres termes, une instruction de programme est utilisée pour produire une commande de départ de vol de cycle et, ensuite, le contrôleur, d'entrée/sortie 10 provoque le transfert d'un nombre spécifié de multiplets sans avoir recours à toute autre commande d'entrée/sortie ou instruction de programme.

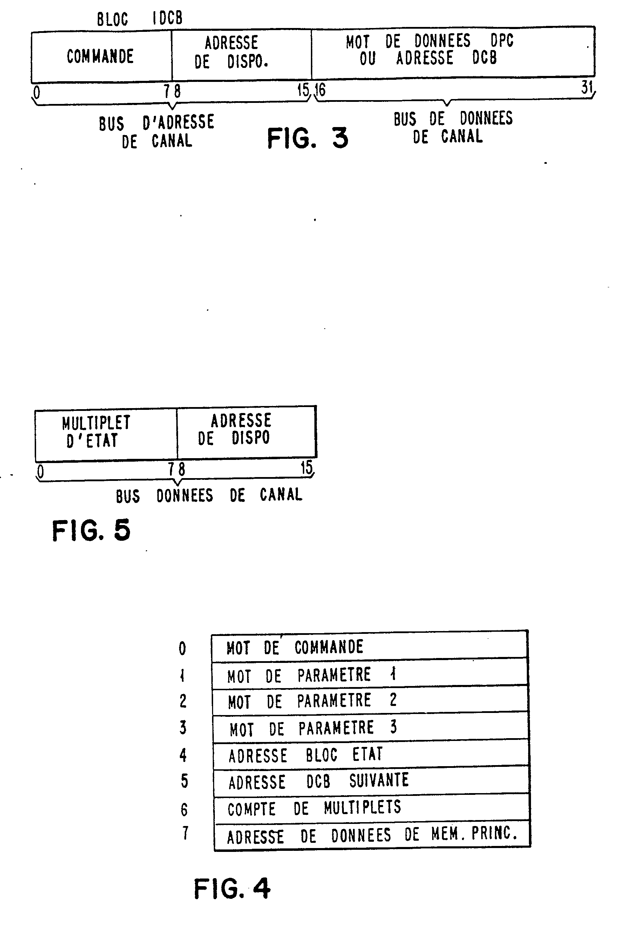

L'instruction du programme du processeur principal utilisée pour provoquer l'envoi d'une commande d'entrée/sortie est appelée ici instruction opératoire d'entrée/sortie (OIO). L'exécution d'une instruction OIO fait qu'un bloc d'information de deux mots, appelé bloc immédiat de commande de dispositif (IDCB), est extrait de la mémoire principale 21 et envoyé au contrôleur d'entrée/sortie 10, par le bus d'interface de canal 23. Le format de ce bloc d'information IDCB est représenté sur la figure 3. Le premier mot est envoyé sur le bus d'adresses de canal 40 et ce mot contient le code de commande d'entrée/sortie et l'adresse de dispositif d'entrée/sortie. Le second mot est envoyé sur le bus de données de canal 26 et, pour une opération d'écriture DPC, comprend le mot de données qui doit être écrit dans le dispositif d'entrée/sortie. Pour une opération de lecture DPC, le mot sur le bus de données de canal 26 est le mot extrait du dispositif d'entrée/sortie et qui est envoyé au processeur principal 11. Dans le cas d'une commande du type par vol de cycle, le second mot du bloc IDCB contient l'adresse dans la mémoire principale 21 d'un bloc de commande de dispositif DCB. Dans le cas d'une commande d'écriture DPC ou d'une commande par vol de cycle, les deux mots IDCB sont transférés au contrôleur d'entrée/sortie 10 en même temps, le premier mot étant transféré au moyen du bus d'adresses de canal 40 et le second mot étant transféré au moyen du bus de données de canal 26.

Chaque mot IDCB est transféré vers le contrôleur d'entrée/sortie au moyen d'une séquence de sélection initiale grâce à laquelle le processeur principal 11 choisit le contrôleur d'entrée/sortie particulier auquel est envoyé le bloc IDCB. Comme étape initiale, le processeur principal 11 place le premier mot du bloc IDCB sur le bus d'adresses 40. Ceci fait que l'adresse de dispositif est envoyée à tous les contrôleurs d'entrée/sortie et à toutes les autres unités qui sont rattachées au bus d'interface de canal 23. Pour le contrôleur d'entrée/sortie, cette adresse de dispositif est examinée par un circuit de comparaison d'adresses de dispositif 64 (voir figure 2A) qui la compare aux adresses de dispositif acceptables qui sont fournies par les connexions d'adresses 65. Puisque, dans l'exemple choisi, le contrôleur d'entrée/sortie 10 est utilisé pour communiquer avec quatre dispositifs d'entrée/sortie différents, les connexions d'adresses 65 fournissent quatre adresses de dispositif différentes au circuit de comparaison d'adresses 64. S'il y a coïncidence avec l'une quelconque de ces quatre adresses de dispositif, le circuit de comparaison d'adresses 64 actionne alors une ligne de sélection de contrôleur 66.

Peu après que le processeur principal 11 a envoyé la commande et l'adresse de dispositif sur le bus d'adresses 40, il actionne la ligne d'adresse 41. En supposant que la ligne de sélection de contrôleur 66 soit active, le circuit ET 67 actionne alors la ligne de retour d'adresse 42 pour indiquer au processeur principal 11 qu'il y a coïncidence d'adresses. En réponse à cette coïncidence, le processeur 11 envoie une impulsion d'échantillonnage sur la ligne d'échantillonnage de données 53. Etant donné que la ligne 42 est active, cette impulsion d'échantillonnage passe par le circuit ET 68 pour atteindre le registre de commande 70 afin de permettre au code de commande, qui est également sur le bus d'adresse 40, d'être chargé dans le registre de commande 70, Cette impulsion d'échantillonnage provenant du circuit ET 68 est également envoyée au registre OIO 71 afin de permettre au deuxième mot du bloc IDCB (sur le bus de données canal 26) d'être chargé dans ce registre OIO 71.

Durant cette séquence de sélection initiale, le processeur principal 11 vérifie également l'état du contrôleur 10 en examinant le code de condition présent sur le bus d'entrée de code de condition à trois bits 43. Ce code de condition est fourni par le registre de code de condition de contrôleur 72. Le contenu du registre 72 est périodiquement mis à jour par le microprocesseur 33, par l'entremise du bus de sortie de données (DBO) afin de donner l'état en cours du contrôleur 10.

Après réalisation des étapes précédentes, le processeur principal 11 rend inactive la ligne d'adresse 41 qui, à son tour, fait que le circuit ET 67 rend inactive la ligne de retour d'adresse 42. Cette opération termine la séquence de sélection initiale. Peu après, la commande dans le registre de commande 70 et l'adresse DCB ou de mot de données dans le registre OIO 71 sont transférées au microprocesseur 33 par le bus d'entrée DBI. Le microprocesseur 33 examine la commande et, suivant l'état en cours du contrôleur 10, décide de la suite des opérations. Plus précisément, suivant le code de commande particulier et l'état en cours, le programme dans le microprocesseur se branche sur la routine ou le sous-programme approprié pour accomplir l'étape suivante.

Par exemple, supposons qu'aucun des dispositifs d'entrée/sortie 13—16 n'est occupé et que la commande est une commande d'écriture DPC. Dans ce cas, le programme dans le microprocesseur 33 se branche sur une routine qui fait que le mot de données reçu du registre OIO 71 est chargé dans le registre de données de dispositif 32, par l'entremise du bus DBI. Cette routine appelle également la séquence de signalisation ou de mise en communication appropriée à l'aide de l'unité de commande de dispositif 12 afin de permettre au mot de données dans le registre de données de dispositif 32 d'être transféré à cette unité 12. L'unité 12 va ensuite transférer ce mot de données dans le dispositif d'entrée/sortie approprié parmi les dispositifs d'entrée/sortie 13—16 suivant le format approprié requis par ce dispositif d'entrée/sortie.

On considère maintenant le cas où la commande reçue à partir du processeur principal 11 et chargée dans le registre de commande 70 est une commande de transfert par vol de cycle. Dans ce cas, cette commande présente dans le registre de commande 70 et l'adresse DCB dans le registre OIO 71 sont transférées au microprocesseur 33 par l'entremise du bus DBI. On suppose, pour le moment, que le contrôleur 10 n'est pas occupé à d'autres tâches et qu'aucun des dispositifs d'entrée/sortie 13—16 n'est occupé. Dans ce cas, le programme dans le microprocesseur 33 se branche sur une routine pour rechercher le bloc de commande de dispositif (DCB) dans le processeur principal 11 et pour l'emmagasiner dans l'unité d'emmagasinage présente dans le microprocesseur 33.

Le format de ce bloc de commande de dispositif est représenté sur la figure 4. Ce bloc de commande de dispositif contient toutes les informations nécessaires au contrôleur 10 pour qu'il commande et accomplisse l'opération de transfert de données par vol de cycle requise. Ce bloc comprend huit mots de seize bits. Le mot 6, par exemple, spécifie le nombre des multiplets de données à transférer jusqu'à un maximum de 65 536 multiplets. Même un plus grand nombre de multiplets peut être transféré sans interrompre le processeur principal 11 par chaînage à un autre bloc DCB une fois le compte de multiplets dans le mot 6 épuisé, l'adresse de départ du bloc DCB suivant étant contenue dans le mot 5 du premier bloc DCB.

L'adresse de départ dans la mémoire principale 21 du processeur principal pour le transfert des données est spécifiée dans le mot 7 du bloc DCB. Pour une opération de sortie (écriture de dispositif), cette adresse est l'adresse de départ des données à prendre dans la mémoire principale 21. Pour une opération d'entrée (lecture de dispositif), cette adresse est l'adresse de départ des données à extraire du dispositif d'entrée/sortie et à transférer sur la mémoire principale 21. Un des bits du mot de commande DCB (mot DCB 0) indique si l'opération est une opération d'entrée (lecture de dispositif) ou une opération de sortie (d'écriture de dispositif); un autre des bits du mot de commande DCB indique s'il y a ou non chaînage à un autre block DCB lorsque le compte de multiplets dans le bloc DCB en cours est épuisé. D'autres détails du bloc de commande de dispositif représenté sur la figure 4 sont donnés dans les références mentionnées ci-dessus et ne sont pas donnés plus avant dans la description suivante.

Le contrôleur 10 recherche les mots DCB dans le processeur principal 11 en procédant par vol de cycles, un mot à la fois, dans le processeur principal 11. En particulier, le microprocesseur 33 fixe l'adresse DCB obtenue à partir du registre OIO 71 dans un compteur d'adresses 73. Cette adresse est ensuite transférée sur un registre d'adresses de vol de cycle 74 dont la sortie est connectée au bus d'adresses de processeur principal 40. Etant donné que le bloc DCB contient 8 mots (16 multiplets), le microprocesseur 33 fixe un compte de 16 dans le compteur de multiplets 75. Le microprocesseur 33 fait que les circuits de commande par vol de cycle 76 actionnent une ligne d'entrée de demande de vol de cycle (CS) 44 en direction du processeur principal 11. Cette opération se fait en envoyant aux circuits de commande 76, le signal d'échantillonnage 63 et le signal de décodage approprié provenant du décodeur ABO 62.

En réponse au signal d'entrée de demande de vol de cycle, le processeur principal 11 amorce les séquences d'interrogation et d'autorisation de service durant lesquelles l'adresse de vol de cycle sur le bus d'adresses 40 est utilisée pour rechercher dans la mémoire principale 21 le mot DCB 0 qui est transféré au registre de données de vol de cycle 30 par le bus de données de canal 26. Le chargement véritable du mot de données dans le registre de données de vol de cycle 30 est accompli par l'impulsion d'échantillonnage envoyée sur la ligne d'échantillonnage de données 53 durant la séquence d'établissement d'autorisation de service. Ces séquences d'interrogation et d'autorisation de service vont être décrites de façon plus détaillée dans la suite. Cependant, il est à noter que, durant la séquence d'autorisation de service, le compteur d'adresses 73 est incrémenté d'un compte de deux et que le compteur de multiplets 75 est décrémenté d'un compte de deux afin de préparer le contrôleur 10 pour le signal d'entrée de demande de vol de cycle suivant. Après réalisation de la séquence d'autorisation de service, la nouvelle adresse dans le compteur d'adresses 73 est chargée dans le registre d'adresses de vol de cycle 74 afin de préparer ce dernier pour le signal d'entrée de demande de vol de cycle suivant.

Le mot DCB qui se trouve dans le registre de données de vol de cycle 30, à ce stade, le mot 0, est ensuite transféré au microprocesseur 33 par le bus DBI. Après l'emmagasinage du mot DCB 0 dans son unité d'emmagasinage, le microprocesseur 33 permet aux circuits de commande de vol de cycle 76 de produire un nouveau signal d'entrée de demande de vol de cycle en actionnant à nouveau la ligne d'entrée de demande CS 44. Ceci provoque la recherche dans la mémoire principale 21 du mot DCB 1 qui est envoyé sur le bus de données de canal 26 et qui est chargé dans le registre de données de vol de cycle 30. Le compteur d'adresses 73 est à nouveau incrémenté de deux et le compteur de multiplets 75 est à nouveau décrémenté de deux, la nouvelle adresse étant ensuite transférée sur le registre d'adresses de vol de cycle 74. Le mot DCB 1 est ensuite transféré à partir du registre de données de vol de cycle 30, par le bus DBI, pour être emmagasiné dans l'unité d'emmagasinage du microprocesseur 33. Ensuite, le microprocesseur 33 permet aux circuits de commande de vol de cycle 76 de produire un nouveau signal d'entrée de demande de vol de cycle sur la ligne 44. Les étapes précédentes se répètent ensuite pour transférer le mot DCB 2 de la mémoire principale de processeur principal 21 à l'unité d'emmagasinage de microprocesseur 33. Ce processus se poursuit jusqu'à ce que le compte dans le compteur de multiplets 75 atteigne une valeur de zéro. De cette manière, les huit mots DCB sont tous transférés dans l'unité d'emmagasinage du microprocesseur 33.

Une fois accomplie l'opération de recherche DCB précédente, le contrôleur 10 accomplit le transfert automatique requis de données du processeur principal à l'unité de commande de dispositif 12, ou vice-versa, par le bus de données de dérivation 31. Vis-à-vis du processeur principal 11, ces transferts de données se font dans le mode par vol de cycle à l'aide des circuits de commande de vol de cycle 76. Dans l'initialisation du transfert automatique, le microprocesseur 33 enclenche (condition active) une bascule de mode automatique 77. Cette opération se fait par l'impulsion d'échantillonnage de microprocesseur (MP) sur la ligne 63 et par le signal de décodage approprié D1 provenant du décodeur ABO 62. Lorsque cela est approprié, la bascule de mode automatique 77 est restaurée (condition inactive) par l'impulsion d'échantillonnage MP et par le signal de décodage D2 provenant du décodeur ABO 62. La condition enclenchée de la bascule 77 (la sortie de mode automatique = 1) signifie que des opérations de transfert de données automatiques sont en cours dans le contrôleur 10.

Comme autre étape initiale, le microprocesseur 33 enclenche une bascule de mode d'entrée/sortie 78, si des opérations d'entrée (lecture de dispositif) doivent être accomplies, ou bien la restaure, si des opérations de sortie (écriture de dispositif) doivent être accomplies. L'impulsion d'échantillonnage MP et le signal de décodage D3 sont utilisés pour enclencher la bascule 78 tandis que l'impulsion d'échantillonnage référence MP et le signal de décodage D4 sont utilisés pour restaurer la bascule 78. La sortie de la bascule 78 est utilisée à des fins logiques dans diverses autres unités du contrôleur 10. Elle fournit également l'indicateur d'entrée/sortie sur la ligne de commande 52 qui conduit au processeur principal 11. L'état dans lequel est placée la bascule 78 est déterminé par le bit indicateur d'entrée/sortie dans le mot de commande DCB emmagasiné dans le microprocesseur 33.

Comme autres étapes d'établissement de mode automatique le microprocesseur 33 fixe dans le compteur d'adresses 73 l'adresse de données de mémoire principale contenue dans le mot 7 du bloc de commande de dispositif et fixe dans le compteur de multiplets 75 le nombre de multiplets contenus dans le mot 6 du bloc de commande de dispositif.

Après réalisation des étapes initiales de l'établissement du mode automatique, les circuits du contrôleur 10 commencent le transfert automatique de données par le bus de données de dérivation 31. Un élément clé dans les opérations de transfert de dérivation, est formé par les circuits de commande de transfert direct 80. Pour un transfert en sortie, les circuits de commande de transfert direct 80 fournissent une impulsion de chargement, par la ligne 37, au registre de données de dispositif 32 lorsqu'on doit transférer des données du registre de données de vol de cycle 30 au registre de données de dispositif 32. Pour un transfert d'entrée, les circuits de commande de transfert direct 80 fournissent une impulsion de chargement, par la ligne 36, au registre de données de vol de cycle 30 lorsqu'il s'agit de transférer des données du registre de données de dispositif 32 au registre de données de vol de cycle 30.

Dans le mode de réalisation de la présente invention, on suppose que le registre de données de dispositif 32 est un registre à seize bits et que le bus de données de dérivation 31 est un bus à 16 bits et que chaque transfert passe un mot de données du registre de données de vol de cycle 30 au registre de données du dispositif 32, ou vice-versa. Cependant, dans quelques réalisations, le registre de données de dispositif 32 peut être un registre à huit bits et le bus de données de dérivation 31 peut être un bus à huit bits. Dans ce cas, chaque transfert sur le bus de dérivation 31 fait passer un multiplet de données du registre de données de vol de cycle 30 au registre de données de dispositif 32, ou vice versa. Néanmoins, le bus de données de canal 26 continue à être un bus à seize bits et le registre de données de vol de cycle 30 continue à être un registre à seize bits. Ainsi, deux transferts sont requis sur le bus de dérivation à huit bits pour charger ou décharger, suivant le cas, le registre de données de vol de cycle 30. Dans ce cas, il y a deux transferts de bus de données de dérivation pour chaque transfert de bus de données de canal. Pour simplifier l'explication, seul le cas supposé initialement, à savoir, un bus de données de dérivation 31 à seize bits et un registre de données de dispositif à seize bits 32, va être considéré dans la suite.

On va maintenant décrire le processus générale des opérations de transfert de données d'entrée en mode automatique. Pour chaque transfert de mot, l'unité de commande de dispositif 12 actionne la ligne d'entrée de demande 55 qui aboutit aux circuits de commande d'interface de dispositif 81. Ceci signifie que l'unité de commande 12 est prête à envoyer des données. Si le registre de données de dispositif 32 est vide, les circuits de commande d'interface 81 vont répondre en actionnant la ligne d'entrée de demande reconnue 56. En réponse, l'unité de commande 12 envoie une impulsion d'échantillonnage sur la ligne de commande d'impulsion active 60. Cette impulsion est envoyée au registre de données de dispositif 32 pour y charger les données apparaissant sur le bus de données de dispositif 28. Cette impulsion est également envoyée aux circuits de commande de transfert direct 80 pour leur signaler que le registre de données du dispositif 32 contient maintenant un mot de données.

Si le registre de données de vol de cycle 30 est vide, les circuits de commande de transfert direct 80 lui envoient une impulsion de chargement, par la ligne 36. Ceci transfère le mot de données se trouvant dans le registre de données de dispositif 32 au registre de données de vol de cycle 30. A ce stade, le registre de données de vol de cycle 30 est "plein" et le registre de données de dispositif 32 est "vide". Les circuits de commande de transfert direct 80 prennent note de ces deux faits dans deux bascules indicatrices de l'état de registre qui sont placées dans ces commandes.

Peu avant le chargement des données dans le registre de données de vol de cycle 30, les circuits de commande 80 signalent aux circuits de commande de vol de cycle 76 d'actionner la ligne d'entrée de demande de vol de cycle 44 qui conduit au processeur principal 11. Ce signal d'entrée de demande de vol de cycle amorce une séquence de signalisation qui permet au processeur principal 11 de recevoir le mot de données qui se trouve alors dans le registre de données de vol de cycle 30. Au cours de ce transfert vers le processeur principal 11, ce dernier signale aux circuits de commande de vol de cycle 76 de rendre inactive la ligne d'entrée de demande de vol de cycle. Près de la fin de ce processus, le processeur principal 11 commande aux circuits de commande de vol de cycle 76 de signaler aux circuits de commande de transfert direct 80 que le registre de données de vol de cycle 30 a été vidé.

Les étapes précédentes se répètent chaque fois qu'un autre mot de données est transféré de l'unité de commande de dispositif 12 au processeur principal 11. Ces étapes se répètent jusqu'à ce que le compteur de multiplets 75 atteigne zéro. A cet égard, chaque fois qu'un mot de données est transféré du registre de données de vol de cycle 30 au processeur principal 11, le compteur d'adresses 73 est incrémenté de deux et le compteur de multiplets est décrémenté de deux. Peu après que le compteur de multiplets 75 a atteint zéro, cet état est détecté par le microprocesseur 33 qui accomplit alors la routine de séquence de fin appropriée.

La séquence générale pour des opérations de transfert de données de sortie en mode automatique va maintenant être étudiée. Chaque transfert de sortie d'un mot est amorcé par le contrôleur 10 en actionnant la ligne d'entrée de demande de vol de cycle 44. Plus particulièrement, lorsque le registre de données de vol de cycle 30 est vide, les circuits de commande de transfert direct 80 indiquent aux circuits de commande de vol de cycle 76 d'actionner la ligne d'entrée de demande de vol de cycle 44. En réponse, le processeur principal 11 recherche dans la mémoire principale 21 le mot de données dont le premier multiplet est indiqué par l'adresse de vol de cycle apparaissant sur le bus d'adresses 40. Ensuite, le processeur principal 11 envoie ce mot de données sur le bus de données de canal 26 et envoie une impulsion d'échantillonnage de données sur la ligne 53. Cette opération fait que le mot de données sur le bus de données de canal 26 est chargé dans le registre de données de vol de cycle 30. L'impulsion sur la ligne 53 est également envoyée aux circuits de commande 80 pour leur indiquer que le registre de données de vol de cycle 30 est maintenant plein.

Si le registre de données de dispositif 32 est vide ou s'il devient vide par la suite, les circuits de commande de transfert direct 80 lui envoient une impulsion de chargement, par la ligne 37. Ces opérations font que le mot de données dans le registre de données de vol de cycle 30 est transféré au registre de données de dispositif 32. A ce stade, les circuits de commande 80 prennent note du fait que le registre de données de dispositif 32 est maintenant plein et que le registre de données de vol de cycle 30 est maintenant vide. Le signal indiquant que le registre de données de vol de cycle 30 est vide, est renvoyé aux circuits de commande de vol de cycle 76 pour qu'ils puissent produire un nouveau signal d'entrée de demande de vol de cycle.

Le signal informant que le registre de données de dispositif 32 est maintenant plein, est envoyé par les circuits de commande de transfert direct 80 aux circuits de commande d'interface de dispositif 81 de sorte que ce registre puisse répondre à l'unité de commande de dispositif 12 lorsque celle-ci indique qu'elle est prête à recevoir les données. Plus particulièrement, lorsque l'unité de commande de dispositif est prête à recevoir des données, elle actionne la ligne d'entrée de demande 55 en direction des circuits de commande d'interface de dispositif 81. Si le registre de données de dispositif 32 est plein, ou chaque fois qu'il devient plein par la suite, les circuits de commande d'interface 81 actionnent la ligne d'entrée de demande reconnue 56 qui conduit à l'unité de commande de dispositif 12. Peu après, les circuits de commande d'interface 81 envoient une impulsion d'échantillonnage à l'unité de commande de dispositif 12, par la ligne de sortie d'échantillonnage 59. Cette impulsion permet à l'unité 12 de recevoir le mot de données qui se trouve alors dans le registre de données de dispositif 32 et qui apparaît sur le bus de données de dispositif 28. A ce stade, les circuits de commande d'interface 81 indiquent aux circuits de commande de transfert direct 80 que le registre de données de dispositif 32 est maintenant vide. Ceci permet aux circuits de commande de transfert de dérivation 80 de produire une nouvelle impulsion de chargement en direction du dispositif de données de dispositif 32, par la ligne 37, aussitôt que le registre de données de vol de cycle 30 devient à nouveau plein.

Les étapes précédentes en mode automatique de sortie sont accomplies chaque fois qu'un mot de données est transféré du processeur principal 11 à l'unité de commande de dispositif 12. Cette procédure se poursuit jusqu'à ce que le compte du compteur de multiplets 75 devienne zéro. A cet égard, chaque fois qu'un nouveau mot de données est chargé dans le registre de données de vol de cycle 30, le compteur d'adresses 73 est incrémenté de deux et le compteur de multiplets 75 est décrémenté de deux. Peu après que le compteur de multiplets 75 ait atteint zéro, le microprocesseur 33 détecte ce fait et effectue la routine de séquence de fin appropriée.

Un registre d'indicateur de dispositif 82 est utilisé avec le bus d'indication de dispositif 54 afin d'envoyer une information de commande à l'unité de commande de dispositif 12. Cette information est obtenue à partir du microprocesseur 33, par le bus DBO. Inversement, le registre 82 est également utilisé pour recevoir des informations de commande provenant de l'unité de commande de dispositif 12. Ces informations de commande sont ensuite envoyées au microprocesseur 33, par le bus DBI.

Un registre d'interruption de dispositif 83 est également connecté au bus 54 et est utilisé pour indiquer au microprocesseur 33 que, un ou plusieurs dispositifs d'entrée/sortie particuliers veulent interrompre le microprocesseur 33 et lui envoyer un message. Le registre d'interruption 83 contient une position de bit distincte pour chacun des quatre dispositifs d'entrée/sortie 13—16. La position de bit zéro est rendue active lorsque le dispositif d'entrée/sortie 13 a une interruption en attente, la position de bit 1 est rendue active lorsque le dispositif d'entrée/sortie 14 a une interruption en attente, etc. Si les bits "indicateurs" envoyés au registre d'interruption 83 sont codés, au lieu d'être des bits significatifs, le registre d'interruption 83 comporte alors à son entrée un décodeur pour déterminer laquelle des quatre positions de bit de registre doit être rendue active pour une valeur de code d'interruption donnée quelconque sur le bus 54. La routine de supervision dans le microprocesseur 33 décode périodiquement le contenu du registre d'interruption 83 pour déterminer éventuellement quels sont les dispositifs d'entrée/sortie qui ont enregistré une interruption.

Une fois que toutes les données ont été transférées pour une commande directe par programme (DPC) ou pour une commande de transfert de données par vol de cycle quelconque, le contrôleur d'entrée/sortie 10 accomplit une séquence de fin pour avertir le processeur principal 11. Dans le mode de réalisation préféré, cette séquence de fin prend la forme d'une séquence d'interruption et se fait au moyen des circuits de commande d'interruption de priorité 84 et d'un registre d'interruption 85. Comme étape préliminaire à cette routine d'interruption, le microprocesseur 33 charge un mot d'interruption dans le registre d'interruption 85. Le format de ce mot d'interruption est représenté sur la figure 5. Son premier multiplet est un multiplet contenant diverses informations d'état. Le deuxième multiplet du mot d'interruption contient l'adresse du dispositif d'entrée/sortie particulier pour lequel se fait cette interruption. Comme autre étape préliminaire, le microprocesseur 33 charge le code de condition approprié dans le registre de code de condition 72. Pour une fin normale, la condition rapportée sera une condition de "fin de dispositif".

La sequence d'interruption est amorcée par les circuits de commande d'interruption 84 lors de la réception par ces circuits de commande de l'impulsion d'échantillonnage MP provenant du microprocesseur 33 et du signal de décodage approprié provenant du décodeur ABO 64. En réponse, les circuits de commande d'interruption 84 excitent une des lignes du bus d'entrée de demande d'interruption (PI) 51. Ce bus 51 comprend autant de lignes qu'il y a de niveaux de priorité. Les lignes portent des bits significatifs, chaque ligne étant utilisée pour signaler un niveau de priorité. Un seul niveau de priorité est attribué au contrôleur 10 même si de multiples dispositifs d'entrée/sortie sont desservis par le contrôleur 10. Une indication codée du niveau de priorité est contenue dans un registre de niveau de priorité ou dans un registre de préparation de niveau placé dans les circuits de commande d'interruption de priorité 84. Ce registre de niveau de priorité est chargé à partir du bus de données de canal 26 durant l'envoi d'une commande de préparation par le processeur principal 11, cette commande étant du type DPC. De cette manière, le processeur principal 11 attribue le niveau de priorité d'interruption au contrôleur d'entrée/sortie 10.

En temps voulu, le processeur principal 11 répond à la ligne d'entrée de demande d'interruption de priorité rendue active du bus 51 en envoyant un signal d'interrogation au contrôleur 10, par le bus d'interrogation 46. Le bus 46 est un bus à cinq bits et le codage des cinq bits de ce bus identifie le niveau de priorité particulier qui doit être reconnu. Ce niveau de priorité est comparé dans les circuits de commande d'interruption de priorité 84 au code qui se trouve dans le registre de niveau de priorité. S'il y a détection d'une coïncidence des niveaux de priorité, les circuits de commande de niveau de priorité 84 actionnent la ligne de retour d'interrogation 47. En réponse, le processeur principal 11 envoie un signal d'autorisation de service au contrôleur 10 sur la ligne d'autorisation de service 49.

A la réception de ce signal, les circuits de commande d'interruption de priorité 84 envoient un signal de retour d'autorisation de service sur la ligne de retour d'autorisation de service 50. En même temps, le contenu du registre d'interruption 85 est placé sur le bus de données de canal 26 et le contenu du registre de code de condition 72 est placé sur le bus d'entrée de code de condition 43. Le signal de retour d'autorisation de service indique au processeur principal 11 que l'information requise est disponible sur le bus de données de canal 26 et sur le bus d'entrée de code de condition 43. Peu après, le processeur principal 11 saisit cette information et l'emmagasinage dans des registres appropriés. Une fois cette opération accomplie, le processeur principal 11 rend inactive la ligne d'autorisation de service 49 afin de provoquer la fin de la séquence d'interruption.

Le processeur principal 11 utilise l'information contenue dans le mot d'interruption et le code de condition comme base de détermination de la prochaine routine de programme d'entrée/sortie à accomplir. Si, par exemple, le code de condition indique une "fin de dispositif" normale et qu'aucune autre interruption n'est en attente, le processeur principal 11 peut alors transmettre l'instruction OIO suivante pour le dispositif d'entrée/sortie particulier qui était à l'origine de l'interruption. Si, en revanche, le code de condition et le multiplet d'état dans le mot d'interruption indiquent qu'il y a un problème, le programme de supervision d'entrée/sortie du processeur 11, se branche sur la routine appropriée pour résoudre ce problème.

Les circuits de commande d'interruption 84 sont, de façon générale, semblables aux circuits de commande d'interruption décrites dans le brevet US—A 4 038 642. En conséquence, il n'en sera donné aucune description détaillée dans la suite.

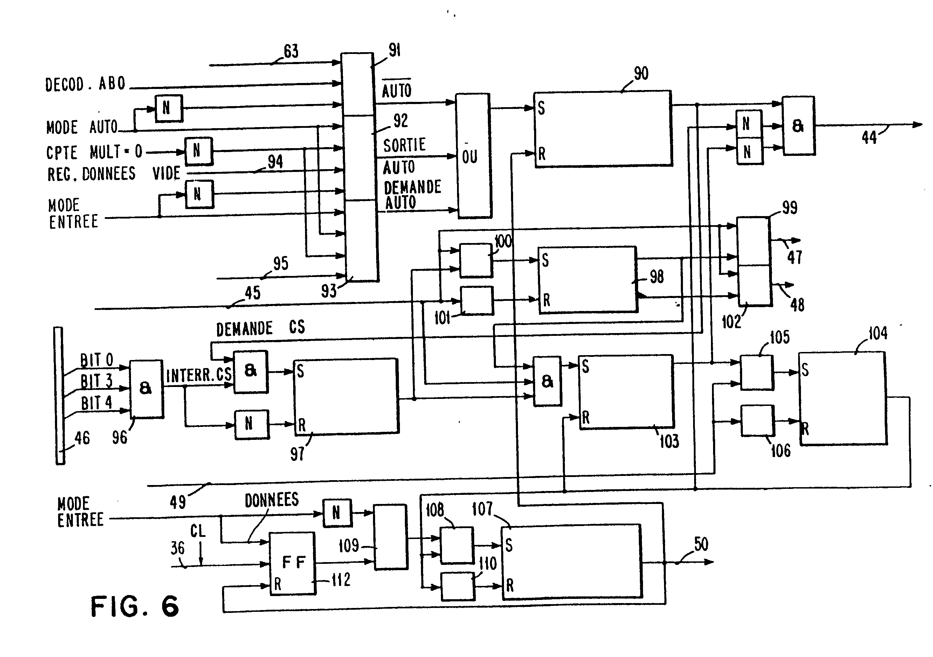

La figure 6 représente la construction interne des circuits de commande de vol de cycle 76 de la figure 2. L'entrée de "mode automatique" de la figure 6 est obtenue à partir de la bascule de mode automatique 77 de la figure 2. L'entrée de "mode entrée" de la figure 6 est obtenue à partir de la bascule de mode d'entrée/sortie 78 de la figure 2. L'entrée de "compte de multiplets = 0 de la figure 6 est obtenue à partir du compteur de multiplets 75 de la figure 2.

Le premier point à noter sur la figure 6 est la bascule de demande de vol de cycle 90. L'enclenchement de cette bascule 90 actionne la ligne d'entrée de demande de vol de cycle 44 qui conduit au processeur principal 11 pourvu que ni un signal de capture d'interrogation en provenance de la bascule 103, ni un signal de capture d'autorisation de service en provenance de la bascule 104 ne se trouve à un niveau actif. Les diverses conditions qui peuvent provoquer l'enclenchement de la bascule à verrouillage 90 sont représentées par les entrées appliquées aux circuits ET 91, 92 et 93. La sortie du circuit ET 91 passe au niveau "haut" lorsque le contrôleur 10 ne se trouve pas en mode automatique, lorsque l'impulsion 63 d'échantillonnage de microprocesseur est présente et lorsque la ligne de sortie du décodeur ABO 62 appropriée est actionnée. Ce mécanisme permet au microprocesseur 33 d'enclencher la bascule de demande de vol de cycle 90.

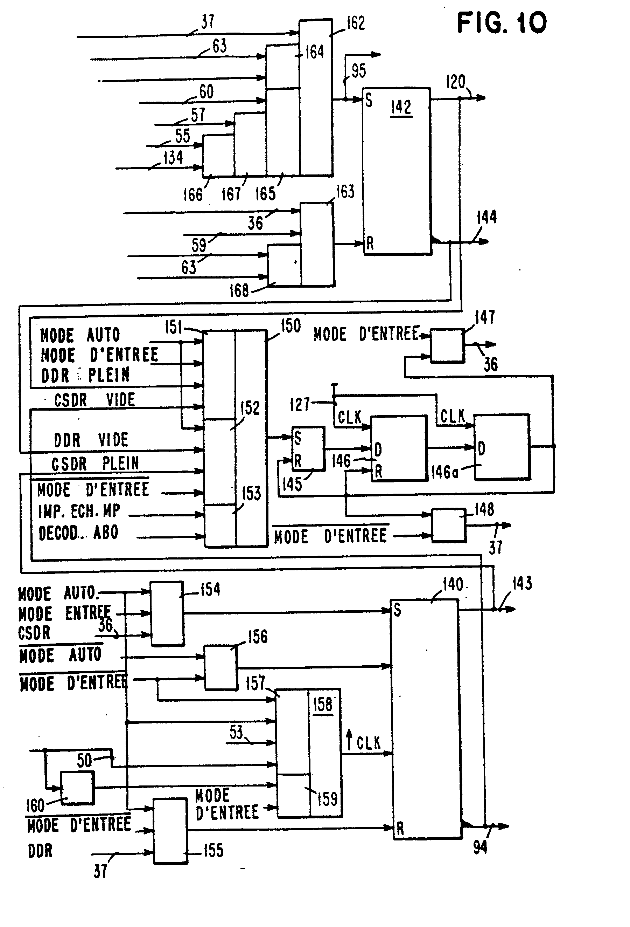

La sortie du circuit ET 92 passe au niveau "haut" lorsqu'on se trouve en mode de sortie automatique (écriture de dispositif), et lorsque le registre de données de vol de cycle 30 se trouve à une condition vide pourvu que le compte de multiplets ne soit pas zéro. La ligne de registre de données vide 94 provient des circuits de commande de transfert direct 80 qui sone représentés de façon plus détailée sur la figure 10.

La sortie du circuit ET 93 passe au niveau "haut" durant une opération d'entrée automatique (lecture de dispositif) au moment où le registre de données de dispositif 32 est chargé d'une mot de données provenant d'un dispositif d'entrée/sortie, pourvu que le compte de multiplets dans le compteur 75 ne soit pas zéro. Comme cela sera vu de façon plus détaillée dans la suite, l'actionnement du signal d'entrée de demande sur la ligne 44 avant que le mot de données ne soit transféré au registre de données de vol de cycle 30, fournit une action de prévision souhaitable qui augmente la cadence du transfert des données. Comme l'indique la figure 6, la sortie du circuit ET 93 passe au niveau "haut" lorsqu'apparaît une impulsion d'enclenchement de "bascule de registre de données de dispositif plein" sur la ligne 95. Cette impulsion est obtenue à partir des circuits de commande de transfert direct 80 qui sont représentés de façon plus détaillée sur la figure 10.

Le deuxième point à considérer ensuite est un circuit ET 96 qui est utilisé pour décoder les signaux sur le bus d'interrogation 46 afin de produire une sortie de niveau 1 lorsque le code de vol de cycle est détecté. Dans l'exemple choisi, on suppose que le code de vol de cycle est "1XX11", les X indiquant des bits "sans signification de contrôle". La détection du signal d'interrogation de vol de cycle par le circuit ET 96 provoque l'enclenchement de la bascule de comparaison de demandes 97 pourvu que la demande de vol de cycle soit en position d'attente vis-à-vis du contrôleur 10. La condition enclenchée de la bascule 97 indique qu'une coïncidence a été obtenue.

Une sortie de "coïncidence" (niveau binaire "1") en provenance de la bascule 97 ainsi que la présence d'une signal d'interrogation sur la ligne d'interrogation 45, permettent la génération d'un signal de retour d'interrogation sur la ligne de retour d'interrogation 47. Cette opération se fait au moyen d'une bascule de retour d'interrogation 98 et du circuit ET 99. Les deux signaux qui viennent juste d'être mentionnés servent à enclencher la bascule de retour d'interrogation 98, par un circuit ET 100. La condition enclenchée de la bascule 98, ainsi que le signal d'interrogation sur la ligne 45, permettent au circuit ET 99 de mettre à un niveau binaire "1" la ligne de retour d'interrogation 47. La disparition du signal d'interrogation sur la ligne 45 restaure la bascule de retour d'interrogation 98, par le circuit inverseur 101. Ceci fait que le signal de retour d'interrogation disparaît sur la ligne de retour d'interrogation 47.

Si il n'y a pas coïncidence d'interrogation, la bascule de retour d'interrogation 98 n'est pas enclenchée, et le signal d'interrogation sur la ligne 45 provoque l'actionnement d'une ligne de propagation d'interrogation 48, par le circuit ET 102. Comme cela a été mentionné dans les références précitées, ceci, en fait, permet au signal d'interrogation de passer au contrôleur d'entrée/sortie suivant par le bus d'interface de canal afin de vérifier si ce contrôleur suivant est bien celui qui a fait une demande de vol de cycle.

Le niveau "de coïncidence" d'interrogation à la sortie de la bascule 97 sert également à enclencher une bascule de capture d'interrogation de vol de cycle 103 pourvu que le signal d'interrogation soit présent sur la ligne 45 et que la bascule de retour d'interrogation 98 ait été enclenchée. La condition d'enclenchement de la bascule 103 indique que la séquence d'interrogation amorcée par le processeur principal 11 a été capturée par le contrôleur d'entrée/sortie 10.

Le point suivant à considérer est une bascule de capture d'autorisation de service de vol de cycle 104. Cette bascule 104 est enclenchée à l'apparition du signal d'autorisation de service sur une ligne d'autorisation de service 49, par le circuit ET 105, pourvu que la bascule de capture d'interrogation 103 soit déjà enclenchée. La condition enclenchée de la bascule 104 indique que l'autorisation de service produite par le processeur principal 11 a été capturée par le contrôleur 10. En outre, cette condition de capture d'autorisation de service est utilisée dans la génération du signal de retour d'autorisation de service renvoyé au processeur principal 11. La bascule 104 est restaurée par le circuit inverseur 106 lorsque la ligne d'autorisation de service 49 est rendue inactive par le processeur principal 11.

Le signal de retour d'autorisation de service sur la ligne 50 est produit lorsqu'une bascule de retour d'autorisation de service de vol de cycle 107 se trouve à l'état enclenché. Lorsque le contrôleur 10 fonctionne en mode de sortie (écriture de dispositif), la bascule de retour d'autorisation de service 107 est immédiatement enclenchée, par l'entremise du circuit ET 108, par l'enclenchement de la bascule de capture d'autorisation de service 104. Dans ce mode de sortie, la seconde entrée au circuit ET 108 se trouve toujours au niveau binaire "1" étant donné que le signal de mode d'entrée est zéro, ce qui produit alors un niveau binaire "1" à la sortie du circuit OU 109. La bascule 107 est restaurée, par l'entremise du circuit inverseur 110 après la restauration de la bascule 104, cette restauration étant provoquée par l'interruption du signal d'autorisation de service sur la ligne 49.

Lorsque le contrôleur 10 fonctionne en mode d'entrée (lecture de dispositif), un mécanisme spécial est utilisé pour retarder, éventuellement, l'enclenchement de la bascule de retour d'autorisation de service 107. Ce mécanisme comprend un circuit basculeur 112 qui bascule au niveau binaire présent sur son entrée de données lorsqu'apparaît un front d'impulsion de pente négative à son entrée d'horloge. Etant donné que le contrôleur 10 fonctionne en mode d'entrée, la ligne de mode d'entrée, et, partant, l'entrée de données du circuit basculeur 112, se trouve au niveau binaire "1". L'entrée d'horloge du circuit basculeur 112 est connectée à la ligne de chargement de registre de données de vol de cycle 36 qui, comme l'indique la figure 2, va des circuits de commande de transfert direct 80 au registre de données de vol de cycle 30. Etant donné que l'impulsion de chargement de registre de données de vol de cycle (CS) est une impulsion de pente positive, le front arrière de cette impulsion enclenche le circuit basculeur 112 (condition binaire "1"). Cette condition enclenchée provoque, par l'entremise du circuit OU 109 et le circuit ET 108, l'enclenchement de la bascule de retour d'autorisation de service 107 étant donné que la bascule 104 a été préalablement enclenchée par e signal d'autorisation de service sur la ligne 49.

Ainsi, pour des opérations d'entrée le front arrière de l'impulsion de chargement de registre de données CS détermine le moment d'actionnement de la ligne de retour d'autorisation de service. Etant donné que le processeur principal 11 n'accepte pas les données apparaissant sur le bus de données de canal 26 jusqu'à ce qu'il reçoive le signal de retour d'autorisation de service en provenance du contrôleur 10, ce processeur 11 ne lit pas les données sur le bus de données de canal 26 avant que le registre de données de vol de cycle 30 n'ait été chargé. Cette précaution est nécessaire puisque, comme cela a été mentionné préalablement en référence au circuit ET 93, la demande de vol de cycle est envoyée au processeur principal 11 avant que le mot de données ne soit transféré au registre de données de vol de cycle 30. Sans cette précaution, le processeur principal 11 pourrait lire des données erronées si le mot de données tarde à être introduit dans le registre de données de vol de cycle 30.

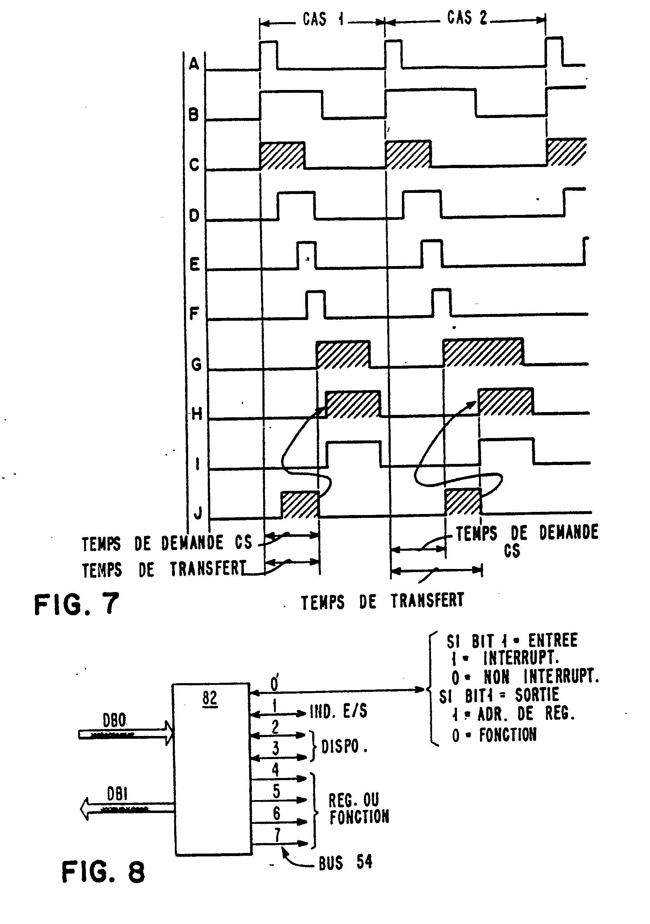

Le diagramme des temps de la figure 7 illustre les relations précédentes pour le cas d'opérations automatiques de transfert de données par vol de cycle. Le signal C montre la demande de vol de cycle dans les signaux envoyés au processeur principal 11, par la ligne d'entrée de demande CS 44. Le signal J montre les Ce chevauchement des temps, bien que relativement peu important et peut-être sans importance dans des types de dispositifs d'entrée/sortie à vitesse réduite, est très important dans le cas de dispositifs d'entrée/sortie à vitesse élevée capables de fonctionner dans une gamme de 300—400 kilomots par seconde.

La figure 8 représente de façon plus détaillée le bus d'indicateur 54 de la figure 2 qui est utilisé pour permettre au microprocesseur 33 du contrôleur 10 de communiquer avec l'unité de commande de dispositif 12, et vice-versa. Comme l'indique la figure 8, les lignes de bus d'indicateur 0—3 sont utilisées en tant que lignes bidirectionnelles et les lignes de bus 4—7 sont utilisées en tant que lignes unidirectionnelles. Les lignes 2 et 3 sont utilisées pour transférer un code binaire à deux bits afin d'identifier le dispositif d'entrée/sortie particulier sur lequel ou pour lequel va se faire la communication. Ainsi, par exemple, le code de dispositif "00" peut être attribué au dispositif d'entrée/sortie 13, le code de dispositif "01" peut être attribué au dispositif d'entrée/sortie 14, etc. Les lignes 4—7 sont utilisées pour fournir à l'unité de commande de dispositif 12 un code binaire à quatre bits identifiant soit un registre particulier dans l'unité 12, sur laquelle ou à partir de laquelle doit être transférée l'information, soit une fonction particulière à remplir dans l'unité de commande de dispositif 12. Il s'ensuit que les lignes 4—7 sont analogues au bus ABO du microprocesseur 33. La ligne 1 est une ligne d'indicateur d'entrée/sortie qui indique si l'information doit être transférée de l'unité 12 au contrôleur 10 ou vice-versa. Pour un transfert dans le contrôleur 10 (bit 1 = entrée), la ligne 0 indique si le transfert est un transfert d'interruption (bit 0 = 1) impulsions de chargement sur la ligne 36, impulsions qui sont utilisées pour charger les mots de données dans le registre de données de vol de cycle 30 à partir du registre de données de dispositif 32. Le cas 1 est le cas où le registre de données de vol de cycle 30 est chargé assez rapidement et où le signal de retour d'autorisation de service (H) est produit de façon normale après l'apparition du signal d'autorisation de service (G). Le cas 2 illustre la condition où le chargement du registre de données de vol de cycle 30 vient après l'apparition du signal d'autorisation de service. Dans ce cas, le retard fourni par le circuit basculeur 112 empêche l'envoi du signal de retour d'autorisation de service avant que ne soit chargé le registre 30 et que les nouvelles données n'y soient entrées.

La figure 7 illustre également l'avantage du mécanisme de prévision qui permet l'envoi de la demande CS avant que ne soit chargé le registre de données de vol de cycle 30. Dans les deux cas, la servitude en temps pour la séquence de demande de vol de cycle (temps requis pour produire la demande de vol de cycle et pour accomplir la séquence d'interrogation) chevauche la servitude en temps pour le transfert des données (temps requis pour déplacer les données du registre de données de dispositif 32 au registre de données de vol de cycle 30), et ce, contrairement à la pratique précédente suivie pour les contrôleurs d'entrée/sortie dans lesquels le signal d'entrée de demande de vol de cycle n'est pas produit avant que ne soit accompli le chargement du registre de données connecté au registre de données de canal. En revanche, le mécanisme de prévision du mode de réalisation de la présente invention fait gagner du temps pour chaque mot de données transféré, lequel temps est égal au temps demande/interrogation, ou si c'est un transfert de données de lecture/écriture (bit 0 = 0). Si, par ailleurs, le transfert est un transfert sur l'unité de commande de dispositif 12 (le bit 1 = sortie), la ligne 0 indique alors si les lignes 4—7 représentent une adresse de registre (bit 0 = 1), ou une fonction (bit 0 = 0).

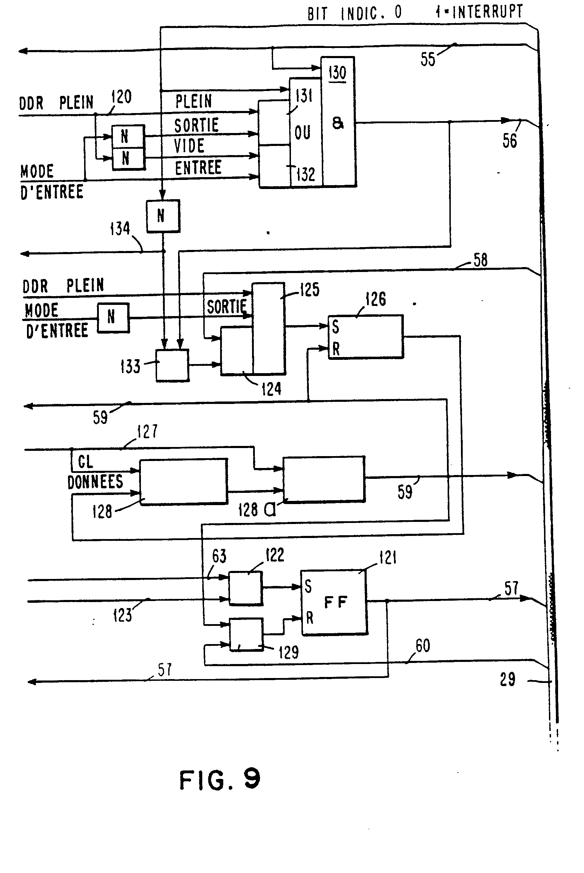

La figure 9 représente de façon détaillée la construction interne des circuits de commande d'interface de dispositif 81 de la figure 2. La communication initiale avec un dispositif d'entrée/sortie particulier est établie au moyen d'une séquence de sortie de demande. Tout d'abord, le microprocesseur 33 charge le registre d'indicateur de dispositif 82 de l'information de commande appropriée et, éventuellement, charge également le registre de données de dispositif 32 de données ou d'autres informations. Le microprocesseur 33 indique également aux circuits de commande de transfert direct 80 de rendre active une ligne de registre de données de dispositif plein (DDR) qui, entre autres, conduit aux circuits de commande d'interface de dispositif 81. Le microprocesseur 33 enclenche ensuite un circuit basculeur de sortie de demande 121 (figure 9) par le circuit ET 122 au moyen d'une impulsion d'échantillonnage de microprocesseur (MP) sur la ligne 63 et du signal de décodage ABO approprié sur la ligne 123, cette dernière étant connectée à la sortie du décodeur ABO 62. Le microprocesseur 33 enclenche également la bascule de mode d'entrée/sortie de contrôleur 78 à la condition de pas de mode d'entrée (sortie) (le mode d'entrée = 0).

En réponse au signal de sortie de demande, l'unité de commande de dispositif 12 actionne la ligne de sortie de demande reconnue 58. Le signal de sortie de demande reconnue est envoyé au moyen du circuit OU 124 et du circuit ET 125 pour enclencher une bascule 126. A la suite de quoi, les quatre impulsions d'oscillateur suivantes qui apparaissent sur la ligne 127 permettent aux circuits basculeurs 128 et 128a de produire une impulsion d'échantillonnage de durée rigoureusement fixée sur la ligne de sortie d'impulsion d'échantillonnage 59. La durée de cette impulsion est le double du temps qui s'écoule entre les fronts avant de deux impulsions d'oscillateur successives. Cette impulsion sur la ligne 59 est envoyée à l'unité de commande de dispositif 12 et permet à cette unité de recevoir l'information qui se trouve dans le registre d'indicateur de dispositif 82 et dans le registre de données de dispositif 32, ces informations apparaissant respectivement sur le bus 54 et sur le bus de données de dispositif 28. Cette impulsion d'échantillonnage restaure également le circuit basculeur de sortie de demande 121 au moyen du circuit OU 129. Ceci met fin à la séquence de sélection initiale du dispositif d'entrée/sortie particulier en question.

Pour des opérations de transfert de données par vol de cycle, l'information envoyée à l'unité de commande de dispositif 12 durant la séquence de sélection initiale fournit à l'unité 12 l'information de commande dont elle a besoin pour accomplir les opérations de transfert de données requises à l'aide du dispositif d'entrée/sortie requis. Après la séquence de sélection initiale, l'unité 12 prend la suite des opérations et signale au contrôleur d'entrée/sortie 10 les moments où l'unité de commande de dispositif 12 est prête au transfert d'un mot de données. Plus particulièrement, l'unité 12 actionne la ligne d'entrée de demande 55 chaque fois qu'elle est prête à transférer un mot de données. En réponse, le circuit ET 130 renvoie un signal d'entrée de demande reconnue sur la ligne 56 à l'unité de commande de dispositif 12 pourvu que l'un ou l'autre des circuits et 131 et 132 fournisse un niveau binaire "1" à la seconde entrée du circuit ET 130. Pour un transfert de sortie (écriture de dispositif), le circuit ET 131 fournit le signal de niveau "1" lorsque le registre de données de dispositif 32 devient plein. Pour un transfert en mode d'entrée (lecture de dispositif), le circuit ET 132 fournit le signal de niveau "1" lorsque le registre de données de dispositif 32 n'est pas plein (vide).

La suite des opérations dépend du mode de transfert, c'est-à-dire, s'il s'agit d'un transfert en mode d'entrée ou d'un transfert en mode de sortie. Dans le cas d'un transfert en mode d'entrée, l'unité de commande de dispositif 12 répond au signal d'entrée de demande reconnue en envoyant une impulsion d'entrée d'échantillonnage sur la ligne 60. Comme l'indique la figure 2, ceci permet au mot de données qui apparaît sur le bus de données de dispositif 28 d'être chargé dans le registre de données de dispositif 32. Comme on peut l'observer sur la figure 10, cette impulsion d'échantillonnage fait également passer à une condition de registre plein une bascule 142 d'indicateur de registre de données de dispositif plein dans les circuits de commande de transfert direct 80.

Dans le cas d'un transfert en mode de sortie, l'apparition d'un signal d'entrée de demande reconnue sur la ligne 56 permet aux bascules 128 et 128a de produire une impulsion de sortie d'échantillonnage sur la ligne 59. Cette opération est accomplie au moyen du circuit ET 133, du circuit OU 124, du circuit ET 125 et de la bascule 126. Cette impulsion de sortie d'échantillonnage permet à l'unité de commande de dispositif 12 d'être chargée du mot de données qui apparaît alors sur le bus de données de dispositif 28. Comme on peut l'observer sur la figure 10, cette impulsion de sortie d'échantillonnage sur la ligne 59 ramène la bascule 142 de registre plein dans les commandes de transfert direct 80, à la condition "vide".

La figure 10 montre de façon détaillée la construction interne des commandes de transfert direct 80 de la figure 2. Pour plus de simplicité, chaque fois que cela est possible, quelques uns des circuits inverseurs correspondant aux lignes de signal d'entrée, n'ont pas été représentés. Par example, quelques unes des lignes d'entrée sont indiquées "mode d'entrée". Ces signaux sont obtenus en prenant la sortie de "mode d'entrée" de la bascule de mode 78 et en la faisant passer dans un circuit inverseur. revanche, les signaux "mode d'entrée" peuve. être obtenus à partir de la sortie complémentaire (non représentée) de la bascule de mode 78. Les mêmes considérations s'appliquent à la ligne d'entrée de "mode automatique" de la figure 10. Dans ce cas, la bascule de mode en question est la bascule de mode automatique 77.

Les circuits de commande de transfert direct représentés sur la figure 10 comprennent deux circuits bistables principaux, à savoir, une bascule de registre de données de vol de cycle (CSDR) plein 140 et une bascule de registre de données de dispositif (DDR) plein 142. Ces circuits 140 et 142 sont des circuits indicateurs à 1 bit pour garder trace du moment où le registre de données de vol de cycle 30 et le registre de données de dispositif 32 sont pleins et vides. En particulier, l'état "enclenché" de la bascule de registre CSDR plein 140 indique que le registre 30 est plein et l'état "restauré" de la bascule de registre CSDR plein 140 indique que le registre 30 est vide. De façon semblable, l'état "enclenché" de la bascule de registre DDR plein 142 indique que le registre de données de dispositif 32 est plein et l'état "restauré" de la bascule de registre DDR plein 142 indique que le registre 32 est vide.

La ligne de sortie de registre CSDR vide 94 de la bascule 140 est le complément de la ligne de sortie de registre CSDR plein 143 de cette bascule 140. De façon semblable, la ligne de sortie de registre DDR vide 144 de la bascule 142 est le complément de la ligne de sortie de registre DDR plein 120 de cette bascule 142.

Les circuits représentés au milieu de la figure 10 sont utilisés pour engendrer les impulsions de chargement de registre CSDR et DDR qui sont respectivement utilisées pour transférer des données du registre de données de dispositif 32 au registre de données de vol de cycle 30, et vice-versa. La portion de ce circuit représentée par la bascule 145 et les bascules 146 et 146a constituent un générateur d'impulsions de précision pour engendrer une impulsion de durée très rigoureuse chaque fois qu'une nouvelle impulsion est appliquée à l'entrée d'enclenchement de la bascule 145. En particulier, une nouvelle impulsion appliquée à l'entrée d'enclenchement de la bascule 145 commute celle-ci sur son état enclenché, ce qui place un niveau binaire "1" sur la ligne d'entrée de données (D) de la bascule 146. Le front avant de l'impulsion d'oscillateur qui apparaît ensuite sur la ligne 127 (ligne d'entrée d'horloge de la bascule 146) fait commuter la bascule 146 à l'état "1", c'est-à-dire, à l'état enclenché, ce qui fournit un niveau "1" à l'entrée des données de la bascule suivante 146a. L'impulsion d'oscillateur suivante enclenche la bascule 146a. La sortie de 146a est renvoyée pour restaurer les bascules 145 et 146 afin d'appliquer un niveau "0" à la bascule 146a. La troisième impulsion d'oscillateur recommute ensuite la bascule 146a à son état "0". Ainsi, l'impulsion résultante qui apparaît à la sortie de la bascule 146a a une durée qui est rigoureusement égale au temps séparant les fronts avants de deux impulsions d'oscillateur successives.

Les impulsions d'oscillateur apparaissant sur la ligne 127 sont obtenues à partir du circuit oscillateur d'impulsions de synchronisation (non représenté) qui est utilisé pour fournir des impulsions de synchronisation au microprocesseur 33.

Chaque impulsion produite par la bascule 146a est envoyée à une paire de circuits ET 147 et 148. Pour un fonctionnement en mode d'entrée, le circuit ET 147 est conditionné (état actif) et le circuit ET 148 est déconditionné (état inactif). Ceci fait passer l'impulsion de bascule sur la ligne de sortie 36 afin que cette dernière reçoive l'impulsion de charge CSDR. Inversement, pour un fonctionnement en mode de sortie (mode d'entrée), le circuit ET 148 est conditionné et le circuit ET 147 est déconditionné. Ceci provoque l'envoi d'une impulsion de bascule sur la ligne de sortie 37 afin d'appliquer sur celle-ci l'impulsion de chargement de registre DDR.

En des temps appropriés, des impulsions sont envoyées à l'entrée d'enclenchement de la bascule 145 au moyen d'un circuit OU 150. Suivant le mode de fonctionnement, ces impulsions sont produites par l'un des circuits appropriés ET 151, 152 et 153. En mode de fonctionnement d'entrée automatique, ces impulsions sont envoyées par le circuit ET 151. Plus particulièrement, lorsqu'apparaît simultanément les conditions de registre DDR plein et de registre CSDR vide, le circuit ET 151 produit une sortie de niveau "1". Cette sortie est envoyée au moyen du circuit OU 150 pour commuter la bascule 145 sur son état enclenché. Peu après, l'impulsion de chargement de registre CSDR est produite sur la ligne 36. Comme cela sera mis en évidence dans la suite, cette impulsion de chargement de registre CSDR enclenche la bascule de registre CSDR plein à la condition de registre plein et restaure la bascule de registre DDR plein 142 à sa condition de registre vide. Ceci ramène la sortie du circuit ET 151 au niveau binaire "0".

En mode de fonctionnement de sortie automatique, les signaux d'enclenchement de la bascule 145 sont produits par le circuit ET 152. Un signal d'enclenchement est produit chaque fois qu'apparaissent simultanément des conditions de registre DDR vide et de registre CSDR plein.

Suivant le besoin, le microprocesseur 33 peut provoquer l'envoi d'une impulsion d'enclenchement sur la bascule 145. Cette opération se fait au moyen du circuit ET 153 lorsqu'il reçoit l'impulsion d'échantillonnage MP et le signal de décodage ABO approprié.

Si l'on considère maintenant les circuits logiques pour enclencher et restaurer la bascule de registre CSDR plein, il faut tout d'abord noter que la bascule 140 peut être enclenchée par l'apparition d'un niveau binaire "1" à la sortie du circuit ET 154. Ce circuit ET 154 est utilisé pour permettre l'enclenchement de la bascule 140 lorsqu'elle fonctionne en mode d'entrée automatique et lorsque les données sont transférées du registre de données de dispositif 32 au registre de données de vol de cycle 30 par l'impulsion de chargement de registre CSDR. Il est en outre à noter que la bascule 140 peut être restaurée (état vide) au moyen d'un circuit ET 155. Cette restauration a lieu en mode de fonctionnement de sortie automatique et au moment où le mot de données est transféré du registre de données de vol de cycle 30 au registre de données de dispositif 32 par l'impulsion de chargement de registre DDR.

Le reste du circuit logique d'entrée de la bascule 140 est utilisé pour assurer les opérations d'enclenchement et de restauration lorsqu'il s'agit de transférer des mots de données sur le processeur principal 11, et en provenance de ce dernier. Plus particulièrement, un circuit OU 156 fournit à l'entrée de données de la bascule 140 un niveau binaire "0" en mode de fonctionnement d'entrée automatique et un niveau binaire "1" en mode de fonctionnement de sortie automatique. Une impulsion de pente positive sur la ligne d'entrée d'horloge de la bascule 140 commute le circuit 140 sur l'état alors indiqué par le niveau binaire sur sa ligne d'entrée de données.

En mode de fonctionnement de sortie automatique, l'impulsion de pente positive de l'entrée d'horloge est fournie par un circuit ET 157 au moyen d'un circuit OU 158. Plus particulièrement, le front avant de l'impulsion d'échantillonnage de données fourni par le processeur principal 11, sur la ligne 53, fournit l'impulsion de pente positive qui commute, dans ce cas, la bascule 140 à l'état "1" (état plein) étant donné que la ligne d'entrée de données se trouve à ce moment au niveau "1".

En mode de fonctionnement d'entrée, l'impulsion de pente positive de l'entrée d'horloge de la bascule 140 est fournie au moyen du circuit ET 159 et du circuit OU 158. De fait, c'est le front arrière du signal de retour d'autorisation de service sur la ligne 50 qui produit l'impulsion de pente positive pour l'entrée d'horloge du circuit basculeur 40. Plus particulièrement, le signal de retour d'autorisation de service est inversé par un circuit 160 de sorte que le front arrière de ce signal soit une impulsion de pente positive. Pendant ce temps, c'est-à-dire, pendant le front arrière du signal de retour d'autorisation de service, le processeur principal 11 a reçu le mot de données provenant du registre de données de vol de cycle 30. D'où, ce temps représente le temps approprié pour restaurer la bascule 140 qui passe alors à sa condition de registre CSDR vide. La bascule 140 est restaurée étant donné que le circuit OU 156 fournit un niveau binaire "0" à l'entrée de données pendant le mode d'entrée automatique.

Si l'on considère maintenant les circuits logiques pour enclencher et restaurer la bascule de registre DDR plein, 142, il est à noter que cette bascule est enclenchée chaque fois qu'apparaît une impulsion à la sortie d'un circuit OU 162, et elle est restaurée (état de registre DDR vide), chaque fois qu'apparaît une impulsion à la sortie d'un circuit OU 163. En considérant tout d'abord la logique qui commande le circuit OU 162, il y a trois possibilités. La première possibilité est que la bascule de registre DDR plein est enclenchée chaque fois qu'un mot de données est transféré du registre de données de vol de cycle 30 au registre de données du dispositif 32. Cette opération se fait à l'aide de l'impulsion de chargement de registre DDR qui apparaît sur la ligne 37.

La deuxième possibilité est lorsque la bascule de registre DDR plein 142 est enclenchée par le microprocesseur 33. Cette opération est accomplie à l'aide du circuit ET 164.

La troisième possibilité apparaît lorsque les données sont transférées de l'unité de commande de dispositif 12 au registre de données de dispositif 32, par l'entremise du bus de données de dispositif 28. Dans ce cas, l'enclenchement de la bascule 142 est accompli au moyen du circuit ET 165. L'entrée qui est importante pour accomplir cette opération est l'impulsion d'échantillonnage de dispositif qui apparaît sur la ligne 60. Pour des transferts en mode par vol de cycle, cette impulsion d'échantillonnage de dispositif est délimitée par un signal d'entrée de demande de dispositif sur la ligne 55, et la ligne de "bit indicateur 0", 134 se trouve au niveau binaire "1". Ainsi, au moment où apparaît l'impulsion d'échantillonnage de dispositif sur la ligne 60, un circuit ET 166 fournit un signal de niveau binaire 1 à la seconde entrée du circuit ET 165 par l'entremise du circuit OU 167, l'impulsion d'entrée d'échantillonnage de dispositif sur la ligne 60 et le signal de sortie de demande de dispositif sur la ligne 57 sont utilisés pour fournir le signal d'enclenchement de bascule sur la ligne 95 lorsque des informations sont reçues en provenance de l'unité de commande de dispositif 12 durant la séquence de sélection initiale d'un dispositif d'entrée/sortie.

Si l'on considère maintenant la logique pour restaurer la bascule de registre DDR plein 142 (état vide), il y a trois façons possibles d'accomplir cette opération. La première possibilité est que la bascule 142 soit restaurée (état vide) par l'impulsion de chargement de registre CSDR qui transfère un mot de données du registre de données de dispositif 32 au registre de données de vol de cycle 33. La deuxième possibilité est que la bascule 142 soit restaurée par l'impulsion de sortie d'échantillonnage de dispositif sur la ligne 59 qui transfère un mot de données du registre 32 à l'unité de commande de dispositif 12. La troisième possibilité est que la bascule soit restaurée par le microprocesseur 33. Cette opération se fait à l'aide de l'impulsion de référence MP et du signal de décodage ABO envoyés à l'entrée d'un circuit ET 168.

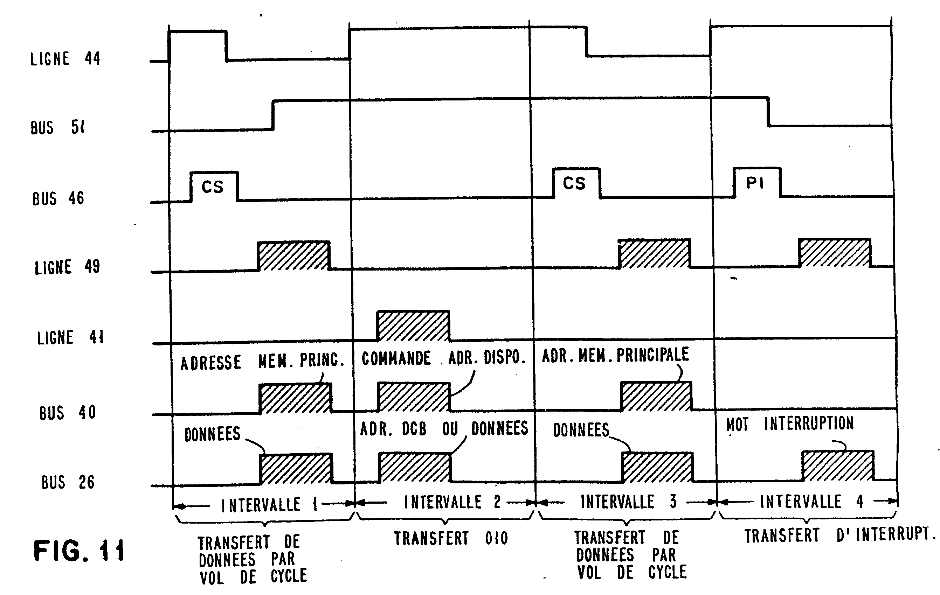

La figure 11 illustre la façon dont le contrôleur d'entrée/sortie 10 peut accomplir simultanément différentes opérations pour différents dispositifs d'entrée/sortie 13—16. Plus particulièrement, on va montrer, dans un exemple, comment le contrôleur 10 peut présenter des interruptions au processeur principal 11 et desservir de commandes supplémentaires d'entrée/sortie à partir du processeur principal 11 simultanément au transfert de données par l'intermédiaire du mécanisme de transfert automatique.

En référence à la figure 2, un facteur principal qui rend possible ce type d'opérations simultanées, est l'utilisation de trois registres de données distincts dont chacun est connecté au bus de données de canal 26. Ces registres sont le registre de données de vol de cycle 30, le registre OIO 71 et le registre d'interruption 85. Comme cela a été mentionné, le registre de données de vol de cycle 30 est utilisé comme faisant partie du mécanisme de transfert automatique. En ce qui concerne le registre OIO 71,

celui-ci permet de desservir des commandes d'entrée/sortie supplémentaires à partir du processeur principal 11 simultanément au transfert automatique de données par l'intermédiaire du registre de données de vol de cycle 30. De façon semblable, le registre d'interruption 35 rend possible la présentation d'interruptions au processeur principal 11 simultanément au transfert automatique de données par l'intermédiaire du registre de données de vol de cycle 30.

En référence à la figure 11, l'exemple représenté est divisé en quatre intervalles de temps successifs 1 à 4. Les transferts de données par vol de cycle par l'intermédiaire du registre de données de vol de cycle 30 sont accomplis durant les intervalles 1 et 3 tandis qu'une commande d'entrée/sortie pour un dispositif d'entrée/sortie différent est desservie durant l'intervalle 2 et la présentation d'une demande d'interruption au processeur principal 11 se fait pour un troisième dispositif d'entrée/sortie durant l'intervalle 4.

La figure 11 concerne le cas où le mécanisme de transfert automatique souhaite présenter un nouveau signal d'entrée de demande de vol de cycle au début de chacun des quatre intervalles de temps. En d'autres termes, en l'absence de la nouvelle commande entrée/sortie et de l'interruption de priorité, le signal d'entrée de demande de vol de cycle indique alors au début des intervalles 2, 3 et 4, le même type d'impulsion que celui représenté au début de l'intervalle 1.

A titre d'exemple, on suppose qu'un transfert automatique est en cours par l'intermédiaire du registre de données de vol de cycle 30, du bus de données de dérivation 31 et du registre de données de dispositif 32 pour le premier dispositif d'entrée/sortie 13. A cet égard, il est à noter que les opérations en mode de transfert automatique communiquent toujours avec le processeur principal 11 dans le mode par vol de cycle. Pour cet exemple, le signal d'entrée de demande CS de la figure 12 est alors produit par le contrôleur 10 pour le compte du premier dispositif d'entrée/sortie 13. A un moment quelconque dans le temps (approximativement le milieu de l'intervalle 1 de la figure 11), une demande d'interruption de priorité (PI) est présentée au processeur principal 11 pour un deuxième dispositif d'entrée/sortie, par exemple, le dispositif d'entrée/sortie 14. Cette opération est accomplie par l'actionnement d'une ligne particulière dans le bus d'entrée de demande PI 51 et est indiquée par la pente positive du signal d'entrée de demande PI de la figure 11. Cependant, le processeur principal 11 ne va pas répondre à cette demande PI avant l'intervalle 4. Entre temps, le mécanisme de transfert automatique poursuit ses transferts de données de vol de cycle aussi souvent que possible.

Environ au début de l'intervalle 2, le processeur principal 11 exécute une instruction

OIO pour un troisième dispositif, par exemple, le dispositif d'entrée/sortie 15. En prenant part à cette exécution, le processeur principal 11 actionne la ligne de commande d'adresse 41 et place respectivement les deux mots du bloc IDCB sur le bus d'adresses du canal 40 et le bus de données de canal 26. La présentation du signal d'adresse sur la ligne 41 permet au processeur principal 11 de ne pas tenir compte temporairement du signal d'entrée de demande de vol de cycle sur la ligne 44.

Durant la séquence de sélection initiale de la commande d'entrée/sortie dans l'intervalle 2, le multiplet de commande sur le bus d'adresses 40 est envoyé dans le registre de commande 70, et le mot d'adresses DCB ou de données sur le bus de données de canal 26 est envoyé dans le registre OIO 71. Après cette opération, le signal d'adresse sur la ligne 41 est rendu inactif et le mécanisme de transfert automatique peut reprendre ses transferts de données par vol de cycle, la reprise de ces transferts étant indiquée par le transfert de données par vol de cycle représenté dans l'intervalle de temps 3. Alors que ces opérations se poursuivent, le microprocesseur 33 reçoit le multiplet de commande provenant du registre de commande 70 et le mot d'adresses DCB ou de données provenant du registre OIO 71.

Si la nouvelle commande d'entrée/sortie est du type qui ne fait pas appel à un transfert de données, le microprocesseur 33 peut alors commencer à desservir cette commande d'entrée/sortie. Des exemples de ces commandes de non transfert de données sont des commandes d'état de lecture, des commandes de préparation et divers types de commandes de contrôle. Pour une commande de ce type, le microprocesseur 33 a, peu après, la possibilité de faire que le contrôleur 10 présente une interruption de priorité pour cette commande. Si, en revanche, la nouvelle commande d'entrée/sortie exige un transfert de données, cette commande et son adresse DBC ou de données associée sont accumulées pour faire la queue dans l'unité d'emmagasinage de microprocesseur et y sont maintenues pour être desservies une fois accomplie l'opération de transfert de données automatique en cours. Dans tous les cas, le fait que le contrôleur 10 accepte la commande d'entrée/sortie signifie que le processeur principal 11 n'est plus obligé de présenter continuellement la commande lorsque le contrôleur est occupé dans une operation de transfert automatique commencée préalablement.

L'intervalle 4 illustre le cas où le processeur principal 11 dessert finalement la demande d'interruption présentée en premier durant l'intervalle 1. Plus particulièrement, le processeur principal 11 envoie une interrogation d'interruption et non pas une interrogation de vol de cycle. Le codage de l'interrogation d'interruption correspond au niveau de priorité attribué au contrôleur 10. Une fois l'interrogation d'interruption capturée par le contrôleur 10, le processeur principal 11 envoie un signal d'autorisation de service sur la ligne 49. En réponse, le contrôleur 10 envoie le signal de retour d'adresse (non représenté sur la figure 11), et le mot d'interruption contenu dans le registre d'interruption 85 est transféré au processeur principal 11, par le bus de données de canal 26. A cet égard, le mot d'interruption a été fixé dans le registre d'interruption 85 par le microprocesseur 33 à peu près au moment où le signal d'entrée de demande PI a été présenté tout d'abord durant l'intervalle 1. Après réalisation du transfert d'interruption de l'intervalle 4, le processeur principal 11 peut desservir le signal d'entrée de demande de vol de cycle en attente sur la ligne d'entrée de demande de vol de cycle 44.

En ce qui concerne les dispositifs du contrôleur 10, le contrôleur 10 peut accepter des demandes d'interruption de dispositif provenant de l'unité de commande de dispositif 12 qui arrivent en même temps que les opérations de transfert de données automatique. Ces demandes d'interruption de dispositif sont reçues par le registre d'interruption de dispositif 83 et sont périodiquement reçues par le microprocesseur 33 pour être ensuite desservies ou pour être empilées dans la queue d'interruption de dispositif appropriée dans l'unité d'emmagasinage de microprocesseur.

L'exemple précédent illustre la souplesse du contrôleur 10 lorsque de multiples dispositifs d'entrée/sortie lui sont connectés. Bien entendu, lorsque cela est souhaité, le contrôleur 10 peut être utilisé pour ne traiter qu'un seul dispositif d'entrée/sortie. Dans ce cas, le contrôleur 10 continue à avoir une meilleure performance que celle des contrôleurs de l'art antérieur par suite de la présence dans le contrôleur 10, du nouveau mécanisme de transfert automatique de données à vitesse élevée, perfectionné au moyen duquel des données peuvent être transférées du processeur principal au dispositif d'entrée/sortie ou vice-versa, sans avoir besoin de passer dans le microprocesseur 33 et sans demander aucune intervention de la part du microprocesseur 33 durant ce transfert automatique.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

### Revendications

1. Contrôleur d'entrée/sortie pour transférer des données entre un processeur principal (11) et des unités d'entrée/sortie (13—16) dans un système de traitement de données, et comprenant:

une première unité de données (30) pour envoyer des données au processeur principal (11) et pour recevoir des données en provenance de ce dernier,

une seconde unité de données (32) pour envoyer des données à une desdites unités d'entrée/sortie (13—16) et pour recevoir des données en provenance de cette dernière,

un bus (31) de transfert de données à vitesse élevée fournissant une connexion de transfert de données directe entre lesdites première (30) et seconde (32) unités de données,

un circuit de commande de transfert automatique (80) couplé auxdites première (30) et seconde (32) unités de données pour commander le transfert automatique des données entre ledit processeur principal (11) et l'une desdites unités d'entrée/sortie (13—16) au moyen de la première unité de données (30), du bus de transfert de données à vitesse élevée (31) et de la seconde unité de données (32), lorsque le système fonctionne en mode de sortie automatique, et le transfert de données de l'une desdites unités d'entrée/sortie au processeur principal au moyen de la seconde unité de données, du bus de transfert de données à vitesse élevée et de la première unité de données lorsque le système est en mode d'entrée automatique.

un premier circuit d'interface (76) chargé de la transmission des signaux de commande d'interface à destination ou en provenance dudit processeur principal (11),

un second circuit d'interface (81) chargé de la transmission des signaux de commande d'interface à destination ou en provenance desdites unités d'entrée/sortie (13—16).

une unité de commande (33) couplée auxdites première (30) et seconde (32) unités de données, audit circuit de commande de transfert automatique (80) et auxdits premier (76) et second (81) circuits d'interface pour superviser la synchronisation des opérations dans ledit contrôleur d'entrée/sortie, pour échanger des informations de commande/état avec le processeur principal et avec l'unité d'entrée sortie et pour fournir une initialisation du circuit de commande avant le commencement des opérations de transfert automatique,

ledit contrôleur d'entrée/sortie étant caractérisé en ce que ledit premier circuit d'interface (76) comprend un mécanisme d'anticipation (93, 90) fournissant un signal de demande de service par vols de cycles (44) audit processeur principal (11) en réponse audit circuit de commande de transfert automatique (80) et indiquant que des données à destination dudit processeur principal (11) se trouvent dans ladite seconde unité de données (32) de sorte que la demande de service est transmise avant que les données soient transférées dans ladite première unité de données (30) par ledit bus de transfert de données à vitesse élevée (31).

2. Contrôleur d'entrée/sortie selon la revendication 1 caractérisé en ce qu'il comprend en outre un circuit de mode de transfert automatique (77) commandant le fonctionnement dudit circuit de commande de transfert automatique (80) en réponse à un signal d'initialisation (63) en provenance de ladite unité de commande (33).

3. Contrôleur d'entrée/sortie selon la revendication 1 ou 2 caractérisé en ce que ladite première unité de données (30) est un premier registre multibits, et ladite seconde unité de données (32) est un second registre multibits.

4. Contrôleur d'entrée/sortie selon la revendication 3 caractérisé en ce qu'il comporte en outre:

un premier circuit indicateur bistable (140) pour fournir une indication de l'état plein/vide dudit premier registre de données (30),

un second circuit indicateur bistable (142) pour fournir une indication de l'état plein/vide dudit second registre de données (32).

5. Contrôleur d'entrée/sortie selon la revendication 3 ou 4, caractérisé en ce que:

les données sont transférées dudit processeur principal (11) audit premier registre de données (30) au moyen d'un bus de données d'interface (26), et

il comporte en outre un troisième registre de données (71) connecté audit bus de données d'interface (26) pour permettre audit processeur principal (11) d'effectuer d'autres opérations d'entrée/sortie en même temps que s'effectue le transfert automatique de données, au moyen desdits premier (30) et second (32) registres de données et dudit bus de transfert de données à vitesse élevée (31).

6. Contrôleur d'entrée/sortie selon la revendication 5, caractérisé en ce qu'il comporte en outre un quatrième registre de données (85) connecté audit bus de données d'interface (26) pour permettre de présenter des demandes d'interruption audit processeur principal en même temps que d'autres opérations d'entrée/sortie sont effectuées au moyen dudit troisième registre de données (71) et que le transfert automatique de données est effectué au moyen desdits premier (30) et second (32) registres de données et dudit bus de transfert de données à vitesse élevée (31).

7. Contrôleur d'entrée/sortie selon l'une quelconque des revendications 1 à 6 caractérisé en ce que ladite unité de commande (33) est un microprocesseur.

**Patentansprüche**

1. Eingabe/Ausgabe-Steuereinheit zum Übertragen von Daten zwischen einem Hauptprozessor (11) und Eingabe/Ausgabe-Einheiten (13—16) in einem Datenverarbeitungssystem, die folgendes einschliesst:

eine erste Dateneinheit (30) zum Übertragen von Daten an den Hauptprozessor (11) und zum Empfang von Daten von demselben,

eine zweite Dateneinheit (32) zum Übertragen von Daten an eine der genannten Eingabe/Ausgabe-Einheiten (13—16) und zum Empfang von Daten von derselben,

einen Hochgeschwindigkeits-Datenübertragungsweg (31), der eine direkte Datenübertragungsverbindung zwischen der ersten (30) und der zweiten (32) Dateneinheit vorsieht.

eine mit der ersten (30) und zweiten (32) Dateneinheit verbundene automatische Übertragungssteuerschaltung (80) zum Steuern der automatischen Übertragung von Daten zwischen dem Hauptprozessor (11) und einer der Eingabe/Ausgabe-Einheiten (13—16) mit Hilfe der ersten Dateneinheit (30), des Hochgeschwindigkeits-Datenübertragungswegs (31) under der zweiten Dateneinheit (32) wenn das System im automatischen Ausgabemodus arbeitet, und zum Steuern der Datenübertragung von einer der genannten Eingabe/Ausgabe-Einheiten zum Hauptprozessor mit Hilfe der zweiten Dateneinheit, dem Hochgeschwindigkeits-Datenübertragungsweg und der ersten Dateneinheit, wenn sich das System im automatischen Eingabemodus befindet.

eine erste Schnittstellenschaltung (76) zum Übertragen von dem Hauptprozessor (11) bestimmten, oder davon kommenden Schnittstellensteuersignalen,

eine zweite Schnittstellenschaltung (81) zum Übertragen von den Eingabe/Ausgabe-Einheiten (13—16) bestimmten, oder davon kommenden Schnittstellensteuersignalen,

eine Steuereinheit (33), die mit der genannten ersten (30) und zweiten (32) Dateneinheit, der automatischen Übertragungssteuerschaltung (80) und der ersten (76) und zweiten (81) Schnittstellenschaltung verbunden ist und dazu dient, das Synchronisieren der Operationen in der Eingabe/Ausgabe-Steuereinheit zu überwachen, die Steuer/Statusinformation zwischen dem Hauptprozessor und der Eingabe/Ausgabe-Einheit auszutauschen, und die Steuerschaltung zu initialisieren, bevor die automatischen Übertragungsoperationen begonnen haben,

wobei die Eingabe/Ausgabe-Steuereinheit dadurch gekennzeichnet ist, dass die genannte erste Schnittstellenschaltung (76) eine Voraussichtsvorrichtung (93, 90) einschliesst, die dem Hauptprozessor (11) als Antwort auf die automatische Übertragungssteuerschaltung (80) ein Zyklusraub-Serviceanforderungssignal zusendet und angibt, dass die genannte zweite Dateneinheit (32) für den Hauptprozessor (11) bestimmte Daten enthält, so dass die Serviceanforderung übertragen wird, bevor Daten über den Hochgeschwindigkeits-Datenübertragungsweg (31) an die erste Dateneinheit (30) übertragen werden.

2. Eingabe/Ausgabe-Steuereinheit nach Anspruch 1, dadurch gekennzeichnet, dass sie überdies eine automatische Übertragungsmodusschaltung (77) aufweist, die als Antwort auf ein von der Steuereinheit (33) ausgehendes Initialisierungssignal (63) den Betrieb des genannten automatischen Steuerschaltung steuert.

3. Eingabe/Ausgabe-Steuereinheit nach Anspruch 1 oder 2, dadurch gekennzeichnet, dass die erste Dateneinheit (30) ein erstes Multibit-Register und die zweite Dateneinheit (32) ein zweites Multibit-Register darstellt.

4. Eingabe/Ausgabe-Steuerschaltung nach Anspruch 3, dadurch gekennzeichnet, dass sie weiterhin vorsieht:

eine erste bistabile Anzeigeschaltung (140) zur Angabe des Voll/Leerzustandes des ersten Datenregisters (30),

eine zweite bistabile Anzeigeschaltung (142) zur Anzeige des Voll/Leerzustandes des zweiten Datenregisters (32).

5. Eingabe/Ausgabe-Steuereinheit nach Anspruch 3 oder 4, dadurch gekennzeichnet, dass

Daten von dem genannten Hauptprozessor (11) über einen Schnittstellendatenweg (26) an das erste Datenregister (30) übertragen werden, und

sie überdies ein drittes an den Schnittstellendatenweg (26) angeschlossenes Datenregister einschliesst, damit der Hauptprozessor weitere Eingabe/Ausgabe-Operationen gleichzeitig mit der automatischen Datenübertragung über das erste (30) und zweite (32) Datenregister und den Hochgeschwindigkeits-Datenübertragungsweg (31) durchführen kann.

6. Eingabe/Ausgabe-Steuereinheit gemäss Anspruch 5, dadurch gekennzeichnet, dass sie weiterhin eine viertes mit diesem Schnittstellendatenweg verbundenes Datenregister (85) einschliesst, um dem Hauptprozessor Unterbrechungsanforderungen zu senden während gleichzeitig andere Eingabe/Ausgabe-Operationen über das dritte Datenregister (71) durchgeführt werden, und dass die automatische Datenübertragung über das erste (30) und zweite (32) Datenregister und über den Hochgeschwindigkeits - Datenübertragungsweg (31) erfolgt.

7. Eingabe/Ausgabe-Steuereinheit gemäss einem der Ansprüche 1 bis 6, dadurch gekennzeichnet, dass die Steuereinheit (33) ein Mikroprozessor ist.

**Claims**

1. An input/output controller for transmitting data between a main processor (11) and input/output units (13—16) in a data processing system, the input/output controller including:

a first data unit (30) for transmitting data to the main processor (11) and for receiving data from the latter,

a second data unit (32) for transmitting data to one of said input/output units (13—16) and the receiving data from the latter,

a high-speed data transfer bus (31) providing a direct data transfer connection between said first (30) and second (32) data units.

an automatic transfer control circuit (80) connected to the first (30) and second (32) data units, for controlling the automatic transfer of data from said main processor (11) and one of said input/output units (13—16) by means of the first data unit (30), the high-speed data transfer bus (31), and the second data unit (32) when the system operates in automatic output mode, and for controlling the transfer of data from one of said input/output units to the main processor by means of the second data unit, the high-speed data transfer bus, and the first data unit when the system is in automatic input mode,

a first interface circuit (76) for transmitting interface control signals going to, or originating from, said main processor (11),

a second interface circuit (81) for transmitting interface control signals going to, or originating from, said input/output units (13—16),

a control unit (33) connected to said first (30) and second (32) data units, to said automatic transfer control circuit (80), and to said first (76) and second (81) interface circuits for supervising the synchronization of the operations in said input/output controller, for exchanging control/status information with the main processor and the input/output unit, and for initializing the control circuit before starting the automatic transfer operations,

said input/output controller being characterized in that said first interface circuit (76) provides an anticipation mechanism (93, 90) supplying a cycle-steal service request signal (44) to said main processor (11) in response to said automatic transfer control circuit (80) and indicating that said second data unit (32) contains data intended for said main processor (11) so that the service request is transmitted before data is transferred to said first data unit (30) by said high-speed data transfer bus (31).

2. An input/output controller according to claim 1, characterized in that it furthermore provides an automatic transfer mode circuit (77) controlling the operation of said automatic control circuit (80) in response to an initialization signal (63) originating from said control unit (33).

3. An input/output controller according to claim 1 or 2, characterized in that said first data unit (30) is a first multibit register, and said second data unit (32) is a second multibit register.

4. An input/output controller according to claim 3, characterized in that it furthermore includes:

a first bistable indicator circuit (140) for supplying an indication of the full/empty status of said first data register (30),

a second bistable indicator circuit (142) for supplying an indication of the full/empty status of the second data register (32).

5. An input/output controller according to claim 3 or 4, characterized in that:

data is transferred from said main processor (11) to said first data register (30) via an interface data bus (26), and

it furthermore includes a third data register (71) connected to said interface data bus (26) in order to allow said main processor (11) to perform further input/output operations simultaneously with the automatic data transfer by means of said first (30) and second (32) data registers and said high-speed data transfer bus (31).

6. A input/output controller according to claim 5, characterized in that it furthermore includes a fourth data register (85) connected to said interface data bus (26) in order to supply interruption requests to said main processor while other input/output operations are simultaneously performed by means of said third data register (71) and in that the automatic data transfer is performed by means of said first (30) and second (32) data registers and said high-speed data transfer bus (31).

7. An input/output controller according to any one of claims 1 to 6, characterized in that said control unit (33) is a microprocessor.

FIG. 1

**FIG. 2**

| FIG. 2A | FIG. 2B |
|---------|---------|

## FIG. 2A

ADRESSES — 65

67 — & — 42

66

68 — &

COMPARATEUR — 64

70

REG. COMMANDE

40

REG. CODE CONTROLEUR — 72

DBO

43

44

45

46

47

48

49

50

**76**

COMMANDE VOLS DE CYCLES

**84**

COMMANDE INTERR. PRIORITE

51

85

REG. INTERR.

52

REG. OIO — 71

53

27

30

36

26

REG. DONNEES

FIG. 2B

0 006 436

BLOC IDCB

| COMMANDE | ADRESSE DE DISPO. | MOT DE DONNEES DPC OU ADRESSE DCB |
|---|---|---|
| 0          7 8 | 15,16 | 31 |

BUS D'ADRESSE DE CANAL

**FIG. 3**

BUS DE DONNEES DE CANAL

| MULTIPLET D'ETAT | ADRESSE DE DISPO |
|---|---|
| 0          7 8 | 15 |

BUS DONNEES DE CANAL

**FIG. 5**

| 0 | MOT DE COMMANDE |
|---|---|
| 1 | MOT DE PARAMETRE 1 |
| 2 | MOT DE PARAMETRE 2 |
| 3 | MOT DE PARAMETRE 3 |
| 4 | ADRESSE BLOC ETAT |
| 5 | ADRESSE DCB SUIVANTE |
| 6 | COMPTE DE MULTIPLETS |
| 7 | ADRESSE DE DONNEES DE MEM. PRINC. |

**FIG. 4**

FIG. 6

0006 436

CAS 1 CAS 2

A

B

C

D

E

F

G

H

I

J

TEMPS DE DEMANDE CS

TEMPS DE TRANSFERT

TEMPS DE DEMANDE CS

## FIG. 7

TEMPS DE TRANSFERT

SI BIT 1 · ENTREE
1 · INTERRUPT.
0 · NON INTERRUPT.
SI BIT1 = SORTIE
1 · ADR. DE REG.
0 · FONCTION

82

DBO

0
1 ──► IND. E/S
2
3 } DISPO.
4
5
6 } REG. OU FONCTION
7

DBI

BUS 54

## FIG. 8

**0 006 436**

FIG. 9

**0 006 436**

**FIG. 10**

FIG. 11

LIGNE 44

BUS 51

BUS 46

CS CS PI

LIGNE 49

LIGNE 41

BUS 40

ADRESSE MEM. PRINC. COMMANDE ADR. DISPO. ADR. MEM. PRINCIPALE

BUS 26

DONNEES ADR. DCB OU DONNEES DONNEES MOT INTERRUPTION

INTERVALLE 1 INTERVALLE 2 INTERVALLE 3 INTERVALLE 4

TRANSFERT DE DONNEES PAR VOL DE CYCLE
TRANSFERT OIO
TRANSFERT DE DONNEES PAR VOL DE CYCLE
TRANSFERT D'INTERRUPT.

0 006 436

9